(19) Europäisches Patentamt
European Patent Office
Office européen des brevets

(11) **EP 2 012 488 B1**

(12) **EUROPEAN PATENT SPECIFICATION**

(45) Date of publication and mention
of the grant of the patent:
**04.03.2009 Bulletin 2009/10**

(51) Int Cl.:
*H04L 27/36* (2006.01)    *H04B 1/707* (2006.01)

(21) Application number: **07425412.9**

(22) Date of filing: **05.07.2007**

(54) **Receiver, method and corresponding computer program product for demodulating ALTBOC modulated signals**

Empfänger, Verfahren und Computerprogrammprodukt zur Demodulation von ALTBOC-modulierten Signalen

Récepteur, procédé et produit de programme informatique correspondant pour la démodulation de signaux à modulation ALTBOC

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**07.01.2009 Bulletin 2009/02**

(73) Proprietors:
• **Fondazione Torino Wireless**
**10121 Torino (IT)**
• **Istituto Superiore Mario Boella sulle Tecnologie dell'Informazione e delle Telecomunicazioni**
**10138 Torino (IT)**
• **POLITECNICO DI TORINO**
**10129 Torino (IT)**

(72) Inventors:
• **Margaria, Davide**
**12038 Savigliano (IT)**
• **Mulassano, Paolo**
**10141 Torino (IT)**
• **Dovis, Fabio**
**10090 Bruino (IT)**

(74) Representative: **Bergadano, Mirko et al**
**Studio Torta S.r.l.**
**Via Viotti, 9**
**10121 Torino (IT)**

(56) References cited:
**WO-A-20/06027004**

**Description**

**TECHNICAL FIELD OF THE INVENTION**

The present invention relates to receivers of AltBOC (Alternated Binary Offset Carrier) modulated signals and to a method for demodulating AltBOC-modulated signals.

The present invention finds advantageous, but not exclusive, application in the field of global navigation satellite systems (GNSSs), to which the ensuing treatment will make explicit reference, without this implying any loss of generality.

**STATE OF THE ART**

As is known, receivers used in global navigation satellite systems, such as for example the global positioning system (GPS), determine their global position basing on the signals received from satellites forming part of a GPS constellation or the like.

For example, the satellites forming part of the GPS constellation transmit signals using two carriers referred to as L1 and L2, wherein the carrier L1 has a frequency of 1575.42 MHz, whilst the carrier L2 has a frequency of 1227.60 MHz.

Each carrier is modulated by at least one pseudorandom binary sequence (PRN), which consists in an apparently random sequence of ones and zeros that repeats periodically. The ones and zeros present in the PRN sequence are generally referred to with the term "code-chips", whilst the transitions from one to zero and vice versa are generally referred to as "chip transitions". Technically, PRN sequences are also referred to as "ranging codes", since they enable estimation of the pseudoranges between receiver and satellite.

Each GPS satellite uses a very precise PRN sequence of its own; for this reason, the GPS receiver can associate the signal received to the satellite that has emitted it by simply determining which PRN sequence is included in the signal.

The GPS receiver calculates the difference between the instant in time in which the satellite has transmitted the signal, information contained in the signal itself, and the instant in time in which the receiver itself has received the signal. Basing on said temporal difference, the receiver calculates its own distance from the satellite, otherwise known as "pseudorange". Using the pseudoranges corresponding to at least four satellites, the receiver is able to calculate its own global position.

To determine the temporal difference between the instant in time in which the satellite transmits the signal and the instant in which the receiver receives it, the receiver synchronizes a PRN sequence generated locally with the PRN sequence present in the signal received. Said synchronization occurs by means of alignment of the code-chips present in each of the sequences. In this way, the GPS receiver determines the degree of temporal deviation of the locally generated PRN sequence with respect to the "GPS time", i.e., the time scale used by the satellite for generating its PRN sequence, and calculates the pseudorange.

The more precisely the GPS receiver aligns the locally generated PRN sequence with the PRN sequence present within the signal received, the more precisely the GPS receiver can determine the temporal deviation between said sequences, the pseudoranges and, consequently, its own global position.

The operations of synchronization include the acquisition of the PRN sequence of the satellite and tracking thereof. To acquire the PRN sequence, typically the GPS receiver makes a series of measurements of correlation at steps of half a code-chip; once the sequence has been acquired, the receiver tracks it.

In general, to carry out synchronization, the receiver makes a series of "early-minus-late" measurements of correlation, namely, a series of measurements of the difference between (i) a measurement of correlation between a PRN sequence of the signal received and an anticipated version of the locally generated PRN sequence, and (ii) a measurement of correlation between the PRN sequence of the signal received and a delayed version of the locally generated PRN sequence.

Subsequently, the GPS receiver uses the "early-minus-late" measurements in a delay-locked loop (DLL), which produces an error signal proportional to the misalignment between the local PRN sequence and the one received. Said error signal is used for controlling the generator of the local PRN sequence, which shifts the local PRN sequence in time so as to minimize the error signal coming from the DLL.

In addition to this, typically the GPS receiver is also able to track the carrier used by the satellite for transmitting the PRN sequence and the navigation data. To do this, the GPS receiver uses a phase-locked loop (PLL).

In the specific case of GPS, the carrier L1 is modulated by two PRN sequences referred to, respectively, as C/A code and P-code. The C/A code is a signal at 1.023 Mcps, whilst the P-code is a signal at 10.23 Mcps.

The carrier L2 is modulated by just the P-code. Furthermore, both of the carriers (L1 and L2) are modulated also with the navigation message, transmitted at 50 bps with a BPSK modulation superimposed on the C/A and P codes: the navigation data are added with modulo-2 addition to the code-chips.

Generally, a GPS receiver acquires the signal coming from a satellite using a locally generated copy of the C/A code, as well as a locally generated carrier L1.

After acquisition, in the tracking step, the receiver synchronizes the local C/A code and the carrier L1 with the C/A code and the carrier L1 of the signal received from the satellite, using appropriate correlators in the DLL and in the PLL. The receiver can subsequently use the information corresponding to tracking of the C/A code for tracking of the P-code in L1 band and/or L2 band, since the temporal relations between said signals are known.

The European Commission and the European Space Agency are developing a new GNSS, known as Galileo, which aims at enabling location of the users with a precision such as to guarantee different types of services. In particular, said services can be divided into:

- free basic service, called Open Service (OS), for applications and services of general interest; unlike the GPS, said service will offer a higher quality and reliability;
- a commercial service (CS), aimed at development of added-value services and professional applications that will offer potentiated performance with respect to the basic service, especially in terms of guarantee of service;
- a "vital" service, known as Safety Of Life Service (SOL), which is able to provide guarantees as regards integrity of the Galileo system for applications concerning human life, such as air or marine navigation;
- a search-and-rescue service (SAR) aimed at improving the systems of assistance in the case of emergency search and rescue; and
- a government service, called Public Regulated Service (PRS), encrypted and resistant to blacking-out and interference, reserved to the needs of public institutions. The signals and codes corresponding to PRS are not available to the public.

In order to guarantee the services referred to, characterized by different levels of precision required, the Galileo system avails itself, not only of appropriate infrastructures on the ground, but also of a constellation of satellites, each of which emits appropriate signals characterized by pseudorandom sequences associated uniquely to the satellite itself, so that the receiver of the user can associate each signal received to the satellite that has emitted it, as occurs in GPS.

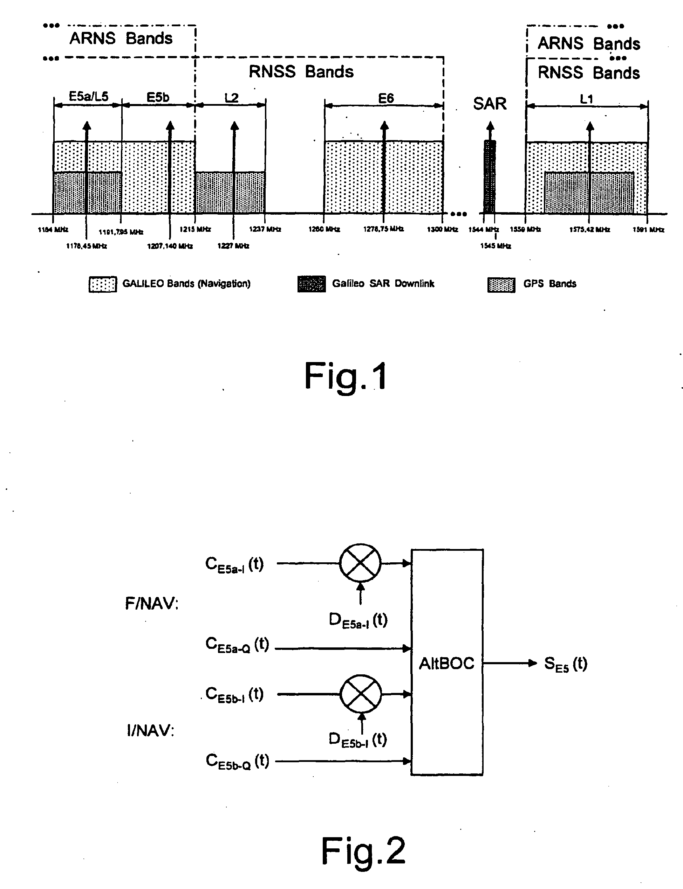

The satellites of the Galileo system will transmit signals, modulating three separate carriers, referred to as E5, E6 and E2-L1-E1 (also known, for reasons of brevity, as L1). The frequencies of said carriers, as well as the respective band occupations of the modulated signals are given in Figure 1, in which ARNS is the band used for the services of air radionavigation, RNSS is the band allocated for the services of satellite radionavigation, and SAR is the band assigned to the search-and-rescue service of the Galileo system.

As far as the signals transmitted in the bands E5, E6, L1 are concerned, there should be mentioned:

- the E1 signal: this is a freely accessible signal transmitted in the band L1 and comprising a data channel, i.e., a signal that contains within it also navigation data, referred to as E1-B, and a pilot channel, i.e., a signal that does not contain data, referred to as E1-C. The ranging codes of the E1 signal are not encrypted, and the navigation data are accessible to all users. The data flow E1-B also contains non-encrypted integrity messages and encrypted commercial data; the data rate of said E1 signal-B is 125 bps. The E1 signal supports OS, CS and SOL services;
- the E6 signal: this is a commercial signal transmitted in the E6 band; it includes a data channel referred to as E6-B and a pilot channel E6-C. Its ranging codes and data are encrypted. The data rate is 500 bps and enables transmission of commercial data for added-value services. The E6 signal is dedicated for CS services;
- the E5a signal: this is a signal freely accessible to users transmitted in the E5 band; it includes a data channel and a pilot channel. The ranging codes of the E5a signal are not encrypted, and the navigation data are accessible to all users. It transmits the basic data supporting navigation and timing, making use of a data rate of 25 bps, designed to guarantee a robust demodulation. The signal E5 supports OS services; and
- the E5b signal: this is a signal freely accessible to users transmitted in the E5 band; it includes a data channel and a pilot channel. The ranging codes of the E5b signal and the navigation data are accessible to all users. The data flow of the channel E5b contains non-encrypted integrity messages and encrypted commercial data. The data rate is 125 bps. The E5b signal supports OS, CS and SOL services.

For greater detail regarding the use of the bands in the Galileo system, as well as for all the information regarding encoding of the signals used, the reader is referred to the publicly available manual "Galileo Open Service Signal In Space Interface Control Document", for reasons of brevity defined hereinafter as "Galileo OS SIS ICD", 2006, European Space Agency / Galileo Joint Undertaking, which can be consulted on the site:
http://www.galitleoic.org/la/files/Galileo%20OS%20SIS%20ICD%202 30506.pdf.
Exactly as in the case of GPS, the receiver receives the signal and calculates its own pseudoranges basing on the difference between the instant in time in which the satellite has transmitted the signal and the instant in time in which the receiver receives the signal.

As far as the E5 band in particular is concerned, the satellites of the Galileo constellation transmit the signals in the E5a sub-band (central frequency equal to 1176.45 MHz) and in the E5b sub-band (central frequency equal to 1207.14 MHz) in the form of a composite signal $s_{E5}(t)$ having a central frequency of 1191.795 MHz, using the modulation format generally known as "Alternative Binary Offset Carrier" (AltBOC). For a more detailed treatment of this format, reference may be made to the aforesaid manual Galileo OS SIS ICD.

From the standpoint of the binary flow of the data, it is possible to imagine the signal $s_{E5}(t)$ as a function of four signals, namely $e_{E5a-I}(t)$, $e_{E5a-Q}(t)$, $e_{E5b-I}(t)$ and $e_{E5b-Q}(t)$. Two of these signals, $e_{E5a-I}(t)$ and $e_{E5b-I}(t)$, contain navigation data and spreading codes, whilst the other two signals, $e_{E5a-Q}(t)$ and $e_{E5b-Q}(t)$, are pilot channels that do not contain data. The subscripts I and Q designate two signals that are in quadrature with respect to one another, the meaning of which will be clarified in what follows.

Illustrated in Figure 2 is a block diagram representing the generation of the signal $s_{E5}(t)$ according to the four signals $e_{E5a-I}(t)$, $e_{E5a-Q}(t)$, $e_{E5b-I}(t)$ and $e_{E5b-Q}(t)$, in which the latter are represented by means of the binary flows of the corresponding spreading codes, designated, respectively, by $C_{E5a-I}(t)$, $C_{E5a-Q}(t)$, $C_{E5b-I}(t)$ and $C_{E5b-Q}(t)$, and by means of the binary flows of the corresponding navigation data, designated, respectively, by $D_{E5a-I}(t)$ and $D_{E5b-I}(t)$. In Figure 2, moreover, the data flows are distinguished into freely accessible navigation messages (Open Service, also referred to as F/NAV) and integrity messages (Safety of Life, also referred to as I/NAV).

In greater detail, the signal $e_{E5a-I}(t)$ can be written as a combination of the navigation data $D_{E5a-I}$ with the ranging code $C_{E5a-I}$:

$$e_{E5a-I}(t) \;=\; \sum_{i=-\infty}^{+\infty}\left[ C_{E5a-I,\,|i|_{L_{E5a-I}}} \cdot D_{E5a-I,\,[i]_{DC_{E5a-I}}} \cdot \mathrm{rect}_{T_{C,E5a-I}}(t - i \cdot T_{C,E5a-I}) \right] \qquad (1)$$

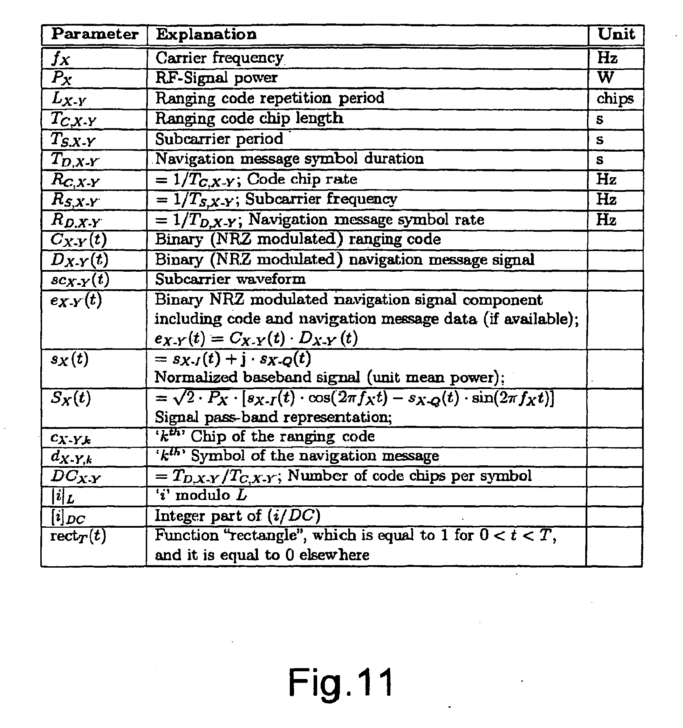

wherein $\mathrm{rect}_T(t)$ is a boxcar function, which is equal to 1 in the interval $0<t<T$ and zero elsewhere. For the meaning of the symbols used in Eq. (1) and in the subsequent ones, see the table presented in Figure 11.

The signal $e_{E5a-Q}(t)$ is instead a pilot channel and consequently contains just the information associated to the ranging code $C_{E5a-Q}$:

$$e_{E5a-Q}(t) \;=\; \sum_{i=-\infty}^{+\infty}\left[ C_{E5a-Q,\,|i|_{L_{E5a-Q}}} \cdot \mathrm{rect}_{T_{C,E5a-Q}}(t - i \cdot T_{C,E5a-Q}) \right] \qquad (2)$$

The signal $e_{E5b-I}(t)$ is given by the combination of the navigation data $D_{E5b-I}$ with the ranging code $C_{E5b-I}$:

$$e_{E5b-I}(t) \;=\; \sum_{i=-\infty}^{+\infty}\left[ C_{E5b-I,\,|i|_{L_{E5b-I}}} \cdot D_{E5b-I,\,[i]_{DC_{E5b-I}}} \cdot \mathrm{rect}_{T_{C,E5b-I}}(t - i \cdot T_{C,E5b-I}) \right] \qquad (3)$$

Finally, the signal $e_{E5b-Q}(t)$ is a pilot channel, present in which is simply the ranging code $C_{E5b-Q}$:

$$e_{E5b-Q}(t) \;=\; \sum_{i=-\infty}^{+\infty}\left[ C_{E5b-Q,\,|i|_{L_{E5b-Q}}} \cdot \mathrm{rect}_{T_{C,E5b-Q}}(t - i \cdot T_{C,E5b-Q}) \right] \qquad (4)$$

The signals $e_{E5a-I}(t)$, $e_{E5a-Q}(t)$, $e_{E5b-I}(t)$ and $e_{E5b-Q}(t)$ are modulated together in just the signal $s_{E5}(t)$ thanks to the Alternative Binary Offset Carrier (AltBOC) modulation. The generation of said AltBOC-modulated signal in the E5 band (1164-1215 MHz) is described in the aforesaid manual Gal OS SIS ICD.

The AltBOC-modulation format consists in a variant of the "Binary Offset Carrier" (BOC) format, which envisages modulation of the signal in the time domain by means of a square wave $sign[sin(2\pi f_s t)]$, which causes a displacement of the spectrum of the signal in a higher band and in a corresponding lower band.

Said modulation format is generally known as BOC$(f_s, f_c)$, wherein $f_s$ is the frequency of the subcarrier (square wave), whilst $f_c$ is the chip frequency of the pseudorandom sequence (code-chip rate). Generally, said frequencies are normalized with respect to a reference frequency of 1.023 MHz; i.e., they are expressed as multiples of said reference frequency and designated, respectively, by m and n. For this reason, the BOC-modulation format (15.345 MHz, 10.23 *Mcps),* for example, is usually expressed as BOC(15,10).

It is possible to express the signal BOC($f_s,f_c$) in the form:

$$s_{BOC} = x(t) \cdot sign\big(\sin\big(2\pi f_s \, t\big)\big) \qquad (5)$$

wherein *x(t)* is a generic base-band signal of a BPSK (Binary Phase Shift Keying) type, which contains the data that are to be transmitted.

The power spectral density $S_{BOC}(f)$ of the modulated signal can be expressed, neglecting the higher-order harmonics, as:

$$S_{BOC} \cong \alpha \cdot X\big(f - f_s\big) - \alpha \cdot X\big(f + f_s\big) \qquad (6)$$

wherein *X(f)* is the power spectral density of *x(t).*

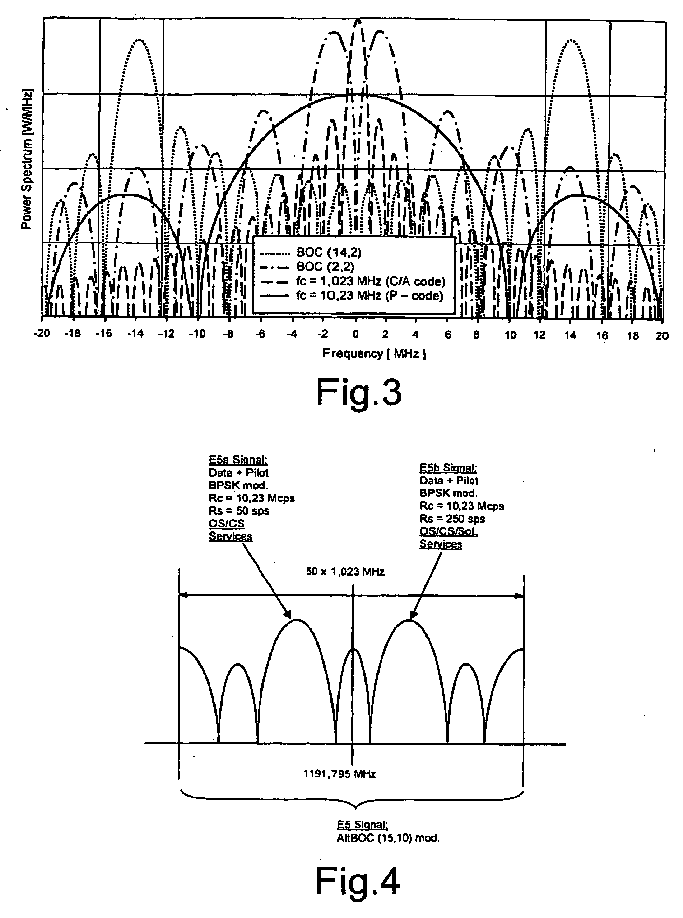

There is thus obtained to a good approximation the division on the spectrum into two components symmetrical with respect to a central frequency, as represented in Figure 3, in which a comparison is given between the spectra of the BOC and BPSK modulations. In particular, in Figure 3 represented with a solid line is the spectral occupation of the P-code, indicated with a dashed line is the spectral occupation of the C/A code, indicated with a dashed-and-dotted line is the spectral occupation of a BOC(2,2)-modulated signal, and finally indicated with a dotted line is the spectral occupation of a BOC(14,2)-modulated signal.

It should, moreover, be noted how as the ratio $f_s/f_c$ (or, equivalently, m/n) increases, the distance between the main side increases and, at the same time, the power associated to the frequencies of the central band decreases.

In the particular case of the Galileo system, the signal *e(t)* is a signal BPSK-modulated with a pseudorandom sequence having a chip rate $R_C$, and possibly also with navigation data having a symbol rate $R_D$ lower than the chip rate $(R_D < R_C)$ .

The BOC-modulation format produces signals having a frequency spectrum divided into two adjacent side frequency bands. Said two side bands of the spectrum contain the same information. In this way, it is possible to transmit the navigation data multiplied by a pseudorandom sequence (PRN) on said two side bands.

To demodulate a BOC-modulated signal, the spectrum of which is, as has been said, divided into two bands, it is possible, after prior locking by the DLL and the PLL of the receiver, to multiply the signal received by a local replica of the square-wave subcarrier *sign[sin(2πf_st)]* appropriately synchronized. This operation causes a base-band translation of the two side bands of the frequency spectrum of the BOC-modulated signal. The signal thus produced can be demodulated as a simple signal of a BPSK type, recovering the navigation data contained therein, after prior despreading with the local PRN sequence.

As compared to the BOC-modulation format, the AltBOC format envisages in its own band the presence of four distinct signals, on two different frequencies and transmitted in phase (I) and in quadrature (Q).

The idea underlying the AltBOC-modulation format consists in modulating the base-band signal with a complex rectangular subcarrier, namely,

$$s_{AltBOC} = x(t) \cdot \big(sign\big(\cos(2\pi f_s t)\big) + j \cdot sign\big(\sin\big(2\pi f_s t\big)\big)\big) = e(t) \cdot (cr(t) + j \cdot sr(t)) = x(t) \cdot er(t) \qquad (7)$$

wherein

$$cr(t) = sign\big(\cos(2\pi f_s t)\big),$$

$$sr(t) = sign\big(\sin\big(2\pi f_s t\big)\big)$$

In this way, the spectrum of the signal is not divided into two symmetrical components as in BOC modulation, but simply translated to higher frequencies. For this reason, the power spectral density of the signal $S_{AltBOC}(f)$ can be approximated, but for higher-order harmonics, as

$$S_{AltBOC}(f) \cong \alpha \cdot X(f - f_s) \qquad (8)$$

Since it is obviously possible to translate the signal also to lower frequencies, it is possible to use different signals, i.e., one containing different navigation codes and messages, for the two side lobes of the AltBOC-modulated signal.

The AltBOC-modulated signal can be expressed then as

$$s_{AltBOC}(t) = x_1(t) \cdot er(t) + x_2(t) \cdot er^*(t) \qquad (9)$$

wherein $x_1(t)$ and $x_2(t)$ are two independent BPSK modulated signals. The spectra of the signals $er(t)$ and $er^*(t)$ are each constituted by a main line, respectively, at frequency $\pm f_s$, and by other lower harmonics spaced by 4 $f_s$. The formula (9) can be rewritten as:

$$s_{AltBOC}(t) = [x_1(t) + x_2(t)] \cdot cr(t) + j \cdot [x_1(t) - x_2(t)] \cdot sr(t) \qquad (10)$$

In the specific case of the Galileo system, in the E5 band an AltBOC(15,10) modulation is used, i.e., with square subcarrier at 15.345 MHz, formed by four BPSK signals with chip rate equal to 10.23 *Mchip/s*, of which two contain navigation data and two are pilot channels. The spectral occupation of the signal E5 is given in Figure 4.

If the representation according to the notation of the base-band complex envelope of the signals $x_1(t)$ and $x_2(t)$, is considered, namely, **$x_1(t)=e_1(t)+j \cdot e_2(t)$, $x_2(t)=e_3(t)+j \cdot e_4(t)$**, substituting said signals $x_1(t)$ and $x_2(t)$ in Eq. (9) the base-band expression of the total signal is obtained:

$$s_{E5}(t) = [e_1(t) + j \cdot e_2(t)] \cdot er(t) + [e_3(t) + j \cdot e_4(t)] \cdot er^*(t) \qquad (11)$$

from which it emerges that $e_1(t)$ and $e_2(t)$ are modulated, respectively, on the in-phase channel and quadrature channel of the higher side band, whilst $e_3(t)$ and $e_4(t)$ are modulated on the same channels of the lower side band.

With reference to the particular case of the Galileo system, to Figure 2, and to what has been stated as regards the data flows modulated in the signal $s_{E5}(t)$, the signals $e_i(t)$, $i=1,2,3,4$ represent, in order, the four components $e_{E5b-I}(t)$, $e_{E5b-Q}(t)$, $e_{E5a-I}(t)$ and $e_{E5a-Q}(t)$ described in Eqs. (1), (2), (3) and (4).

It is consequently possible to write

$$e_{E5a-I}(t) \equiv e_3(t) = \sum_{i=-\infty}^{+\infty} \left[ C_{E5a-I, |i|_{L_{E5a-I}}} \cdot D_{E5a-I, [i]_{DC_{E5a-I}}} \cdot \text{rect}_{T_{C,E5a-I}}(t - i \cdot T_{C,E5a-I}) \right] \qquad (12)$$

$$e_{E5a-Q}(t) \equiv e_4(t) = \sum_{i=-\infty}^{+\infty} \left[ C_{E5a-Q, |i|_{L_{E5a-Q}}} \cdot \text{rect}_{T_{C,E5a-Q}}(t - i \cdot T_{C,E5a-Q}) \right] \qquad (13)$$

$$e_{E5b-I}(t) \equiv e_1(t) = \sum_{i=-\infty}^{+\infty} \left[ C_{E5b-I, |i|_{L_{E5b-I}}} \cdot D_{E5b-I, [i]_{DC_{E5b-I}}} \cdot \text{rect}_{T_{C,E5b-I}}(t - i \cdot T_{C,E5b-I}) \right] \qquad (14)$$

$$e_{E5b-Q}(t) \equiv e_2(t) = \sum_{i=-\infty}^{+\infty}\left[C_{E5b-Q,|i|_{L_{E5b-Q}}} \cdot \operatorname{rect}_{T_{C,E5b-Q}}(t - i \cdot T_{C,E5b-Q})\right] \qquad (15)$$

For the meaning of the symbols used in Eqs. (12-15) the reader is once again referred to Table 1.

The analytical expression of the AltBOC-modulated signal $s_{E5}(t)$ in the base-band complex envelope representation is given hereinafter, with the notation used in the aforesaid manual Gal OS SIS ICD:

$$
\begin{aligned}
s_{E5}(t) = \quad & \frac{1}{2\cdot\sqrt{2}}\cdot\left[e_{E5a-I}(t)+j\cdot e_{E5a-Q}(t)\right]\cdot\left[sc_{E5-S}(t)-j\cdot sc_{E5-S}(t-T_{S,E5}/4)\right]+ \quad (16)\\[2mm]
& \frac{1}{2\cdot\sqrt{2}}\cdot\left[e_{E5b-I}(t)+j\cdot e_{E5b-Q}(t)\right]\cdot\left[sc_{E5-S}(t)+j\cdot sc_{E5-S}(t-T_{S,E5}/4)\right]+ \\[2mm]
& \frac{1}{2\cdot\sqrt{2}}\cdot\left[\overline{e}_{E5a-I}(t)+j\cdot\overline{e}_{E5a-Q}(t)\right]\cdot\left[sc_{E5-P}(t)-j\cdot sc_{E5-P}(t-T_{S,E5}/4)\right]+ \\[2mm]
& \frac{1}{2\cdot\sqrt{2}}\cdot\left[\overline{e}_{E5b-I}(t)+j\cdot\overline{e}_{E5b-Q}(t)\right]\cdot\left[sc_{E5-P}(t)+j\cdot sc_{E5-P}(t-T_{S,E5}/4)\right]
\end{aligned}
$$

The signals $e_{E5a-I}(t)$, $e_{E5a-Q}(t)$, $e_{E5b-I}(t)$ and $e_{E5b-Q}(t)$ are precisely the signals described in Eqs. (12-15) and are BPSK-modulated. The signals $\overline{e}_{E5a-I}$, $\overline{e}_{E5a-Q}$, $\overline{e}_{E5b-I}$, $\overline{e}_{E5b-Q}$ are referred to as "product signals" and are defined as follows:

$$\overline{e}_{E5a-I} = e_{E5a-Q}\cdot e_{E5b-I}\cdot e_{E5b-Q} \qquad (17)$$

$$\overline{e}_{E5a-Q} = e_{E5a-I}\cdot e_{E5b-I}\cdot e_{E5b-Q} \qquad (18)$$

$$\overline{e}_{E5b-I} = e_{E5b-Q}\cdot e_{E5a-I}\cdot e_{E5a-Q} \qquad (19)$$

$$\overline{e}_{E5b-Q} = e_{E5a-I}\cdot e_{E5a-I}\cdot e_{E5a-Q} \qquad (20)$$

Finally, the functions $sc_{E5-S}(t)$ and $sc_{E5-P}(t)$ are subcarrier functions, which are rectangular functions on four levels. They are defined by the following equations:

$$sc_{E5-S}(t) = \sum_{i=+\infty}^{-\infty} AS_{|i|_8}\cdot \operatorname{rect}_{T_{S,E5}/8}\left(t-i\cdot T_{s,E5}/8\right) \qquad (21)$$

$$sc_{E5-P}(t) = \sum_{i=+\infty}^{-\infty} AP_{|i|_8}\cdot \operatorname{rect}_{T_{S,E5}/8}\left(t-i\cdot T_{s,E5}/8\right)$$

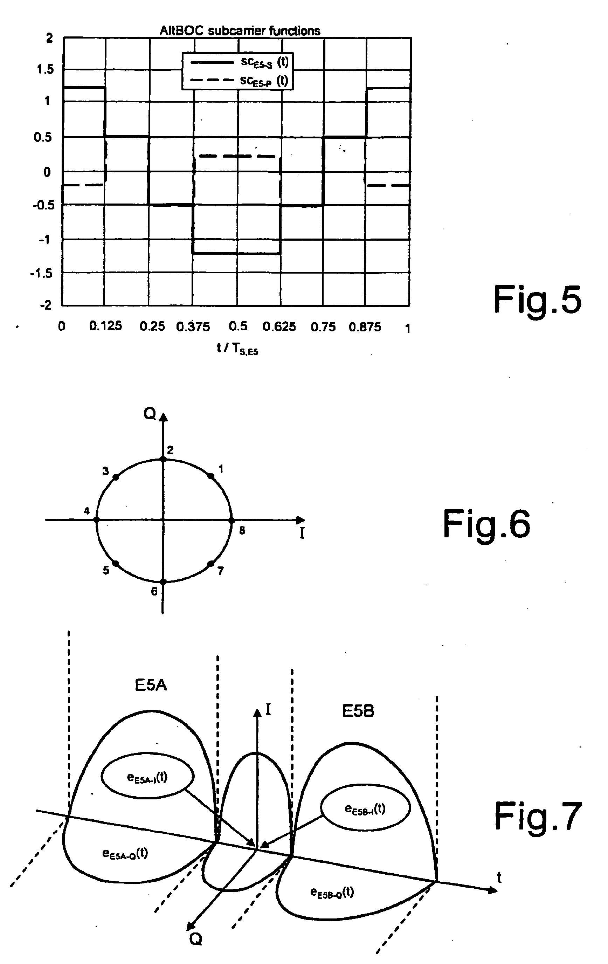

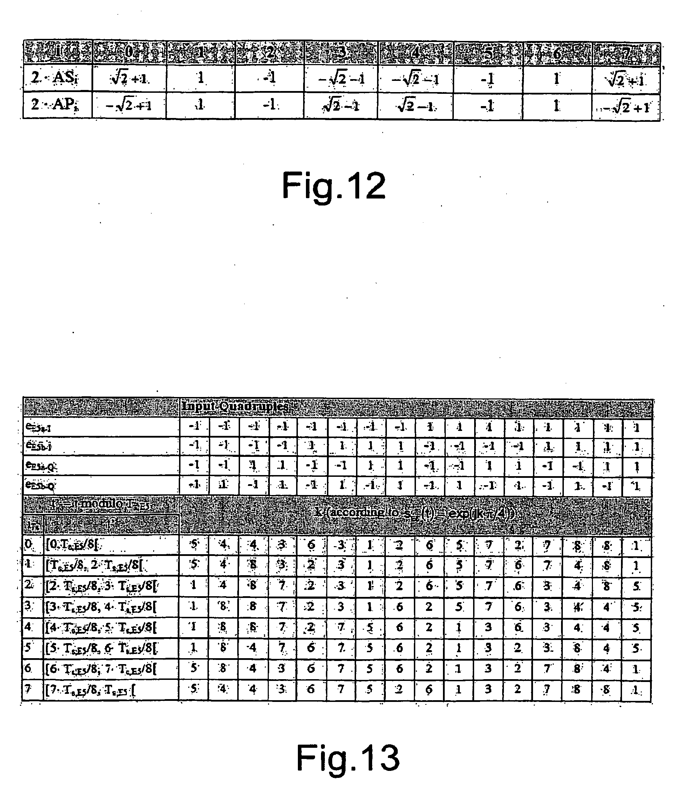

The coefficients $AS_i$ and $AP_i$ are defined in Table 2 illustrated in Figure 12. A period of the functions $sc_{E5-S}(t)$ and $SC_{E5-P}(t)$ is given in Figure 5, wherein the former is represented with a solid line, whilst the latter is represented with a dashed line. For simplicity of notation, it is anticipated here that the signal $sc_{E5-S}(t-T_{S,E5}/4)$ present in Eq. (16) will be designated in what follows by $sc_{E5-S}^{off}(t)$.

It is possible to show that the base-band complex signal $s_{E5}(t)$ can be described as an 8-PSK-modulated signal:

$$s_{E5}(t) = exp\left(j\frac{\pi}{4}k(t)\right) \quad with \quad k(t) \in \{1,2,3,4,5,6,7,8\} \tag{22}$$

The corresponding states in the phase plane of said 8-PSK signal are given in Figure 6.

The relation between the 8 states in the phase plane and the 16 possible combinations of states of the quartet $e_{E5a-I}(t)$, $e_{E5a-Q}(t)$, $e_{E5b-I}(t)$ and $e_{E5b-Q}(t)$ also depend upon time. For this reason time is divided first into subintervals $T_{s,E5}$ of the subcarrier, then again into 8 equal subperiods. The index $i_{Ts}$ of the subperiod is given by the following equation:

$$i_{Ts} = int\left[\frac{8}{T_{s,E5}} \cdot \left(t \quad mod \quad T_{s,E5}\right)\right] \quad with \quad i_{Ts} \in \{0,1,2,3,4,5,6,7\} \tag{23}$$

The dependence of the states in the phase plane upon the input quartet and upon time is given in Table 3 presented in Figure 13.

In practice, as highlighted in Figure 4, it may be noted that AltBOC modulation enables use of the E5 band as two separate side bands, which are known as E5a band (1164-1191.795 MHz) and E5b band (1191.795-1215 MHz). In this way, a single data channel, equivalent to a BPSK-modulated signal, and a pilot channel, i.e., another BPSK-modulated signal, are transmitted in each side band. Consequently, the AltBOC-modulation scheme can also be viewed as the combination of two separate QPSK (Quadrature Phase Shift Keying) modulations, centred, respectively, at the central frequencies of the E5a and E5b bands.

Demodulating the navigation data contained in the signal received is consequently complicated by the fact that the two channels $e_{E5a-I}(t)$ and $e_{E5b-I}(t)$ are transmitted in different side bands.

Architectures of receivers for reception and processing of AltBOC-modulated signals are, for example, described in the patent applications WO2005/00611 and WO2006/027004, proposed in which are different methods of implementation of the operations of correlation necessary for coherent reception of the entire E5 band.

The patent application WO2006/027004 describes a method for demodulating AltBOC-modulated signals comprising at least two subcarriers each having an in-phase component and a quadrature component modulated by pseudorandom codes. In particular, the quadrature components are modulated by pilot signals which do not carry data, whilst the in-phase components are modulated by signals containing data. The demodulation method envisages conversion of the AltBOC-modulated signal at intermediate frequency, pass-band filtering of the converted signals, sampling of the filtered signals, generation of a phase of the carrier, rotation of the phase of the carrier of the sampled signals via said phase of the carrier, correlation of the sampled and rotated signals, and generation, for each subcarrier, of pseudorandom binary codes and a phase of the subcarrier, which are used for correlating the signals sampled and rotated.

Another solution for demodulating the AltBOC-modulated signal is proposed in the patent application W02005/006011. In particular, this document describes a GNSS receiver, which tracks an AltBOC(15, 10)-modulated signal, or its E5a and E5b components, using a hardware that generates locally the complex signal, combining its real and imaginary components, which are generated separately. In order to track the pilot signals that do not carry data, which are transmitted on the quadrature channel of the AltBOC-modulated signal, the receiver activates generators of pseudorandom sequences, which supply replicas of the PRN sequences of the E5a and E5b signals, and square-wave generators, which supply the real part and the imaginary part of the complex signal generated locally. The receiver eliminates the complex signal from the signal received by multiplying the latter, the in-phase and quadrature components of which have been translated into base-band, by the complex signal generated locally. The receiver then uses the results, which are correlated to the in-phase and quadrature components, for estimating the tracking error of the carrier phase. The error signal is then used for controlling in a known way a numeric-control oscillator, for correcting the phase of the locally generated carrier. The receiver also uses anticipated and delayed versions of the complex pilot signal generated locally in a DLL, and aligns the locally generated complex pilot signal with the complex pilot signal received, minimizing the corresponding error signal of the DLL. Once the receiver is tracking the composite pilot signal, the receiver determines its pseudorange and the global position in a known way. The receiver moreover uses a distinct set of correlators to align locally generated versions of the PRN sequences in phase with the PRN sequences of the in-phase channel present in the signal received, thus recovering the transmitted data.

## OBJECT AND SUMMARY OF THE INVENTION

With reference to the patent application No. WO2006/027004, the present applicant has noted that it does not strictly tackle the problem of demodulation, since it is not concerned on recovery of the navigation data, but rather illustrates methods and devices for tracking the pilot channels.

With reference, instead, to the patent application No. WO2005/006011, the applicant has noted that it presents numerous critical aspects. In the first place, it requires a very complicated processing of the signals, since it envisages generation of complex signals; in addition, a further processing is required for decoding the navigation data. In the second place, the performance of the receiver is degraded by the correlation losses: the locally generated subcarriers differ from the ones used by the satellite Galileo, and this implies a degradation of the correlation. In particular, it requires the use of square-wave subcarriers and sinusoidal subcarriers referred to, respectively, as Complex-BOC and Complex-LOC, which are approximations of the AltBOC-modulated signal received. However, the true AltBOC-modulated signal that will be used in the Galileo system differs from the signals Complex-LOC and Complex-BOC on account of the presence of additional terms, the so-called product signals defined in Eqs. (17-20), and on account of the different shape of the subcarriers $sc_{E5-S}(t)$ and $sc_{E5-P}(t)$, so that the performance obtained is not optimal.

To these first considerations it is necessary to add the fact that the technique described is vulnerable, in so far as an error on one data channel, caused for example by an interference, can cause damage to the demodulation of the other channel, because the two data channels are demodulated jointly.

Finally, the technique proposed does not enable demodulating just one data channel, as it might be useful to do, for example, in situations in which the navigation data of the other data channel are not necessary.

The aim of the present invention is to provide a receiver of AltBOC-modulated signals and a method for demodulating said signals that will enable the drawbacks of the known art to be overcome at least in part.

The above aim is achieved by the present invention in so far as it relates to a receiver of AltBOC-modulated signals, to a method for demodulating AltBOC-modulated signals, and to a corresponding computer program product, as defined in the annexed claims.

Broadly speaking, the present invention stems from the realization that an AltBOC-modulated signal may be decomposed into four BPSK-modulated in-phase and quadrature signals around two distinct frequencies in two adjacent bands.

In particular, with reference to the aforementioned signals $e_{E5a-I}(t)$, $e_{E5a-Q}(t)$, $e_{E5b-I}(t)$ and $e_{E5b-Q}(t)$ transmitted in the E5 band of the Galileo system, the present invention enables extraction of the in-phase components $e_{E5a-I}(t)$ and $e_{E5b-I}(t)$ implementing a technique of frequency translation forming the subject of the present invention, which in what follows will be referred to for reasons of brevity as "Side-Band Translation" (SBT).

In greater detail, considering the spectral occupation of an AltBOC-modulated signal represented in Figure 7, in order to extract the signals $e_{E5a-I}(t)$ and $e_{E5b-I}(t)$, the spectrum of the signal received is translated (carrying out a frequency "shift") from the side bands to the base band via the aforesaid SBT technique, and subsequently the in-phase signals $e_{E5a-I}(t)$ and $e_{E5b-I}(t)$, which contain the navigation data, are selected. From a theoretical standpoint, the translation of the spectrum of the signal received is performed by multiplying the signal received by complex exponentials, whilst the selection of the in-phase signals $e_{E5a-I}(t)$ and $e_{E5b-I}(t)$ is performed by extracting only the real parts of the signals translated in frequency.

From a practical standpoint, the base-band translation of the spectrum of the signal received is performed by multiplying the signal received by real signals, and in particular local replicas of the signal $sc_{E5-S}(t)$ defined in Eq. (21), subcarrier of the AltBOC-modulated signal. The selection of the in-phase signals $e_{E5a-I}(t)$ and $e_{E5b-I}(t)$ is instead performed in a traditional way by extracting the real part of the translated signals.

The in-phase signals $e_{E5a-I}(t)$ and $e_{E5b-I}(t)$ thus extracted are subjected to operations of despreading and BPSK demodulation performed according to the known art, thus recovering the navigation data.

Since it is based upon a simple processing of the signal, the present invention guarantees better performance in reception, greater resilience to interference, as well as a high flexibility of use.

## BRIEF DESCRIPTION OF THE FIGURES

Advantages, objectives and characteristics of the present invention will become clearer from the ensuing detailed description with reference to the attached plates of drawings which represent some embodiments of the present invention; in the attached drawings, parts that are identical or correspond to the ones already illustrated are identified by the same reference numbers. In particular:

- Figure 1 shows the spectral occupation of the bands used in the global navigation systems GPS and Galileo;
- Figure 2 shows modulated data flows in the AltBOC-modulated signal;
- Figure 3 shows a comparison between the spectral occupations of BOC-modulated signals and BPSK-modulated signals;

- Figure 4 shows the spectral occupation of the AltBOC-modulated signal present in the E5 band of the global navigation system Galileo;
- Figure 5 shows a period of the subcarriers $SC_{E5-S}(t)$ and $SC_{E5-P}(t)$ of the AltBOC-modulated signal;
- Figure 6 shows the states in the phase plane of the AltBOC-modulated signal viewed as an equivalent 8-PSK modulation;
- Figure 7 is a schematic representation of the spectral occupation of the AltBOC-modulated signal present in the E5 band;
- Figure 8 shows a theoretical block diagram of a technique for extraction of the in-phase components of the AltBOC-modulated signal according to the present invention;
- Figure 9 shows a block diagram implementing the technique of extraction of the in-phase components of the AltBOC-modulated signal according to the present invention;
- Figure 10 shows a high-level block diagram of the architecture of a receiver for Galileo AltBOC signals, based upon coherent reception and processing of the entire Galileo E5 band, which forms the subject of the present invention; and
- Figures 11, 12 and 13 show tables that explain the symbology used in the ensuing treatment.

## DETAILED DESCRIPTION OF THE INVENTION

As mentioned previously, the SBT technique according to the present invention envisages making two separate translations in frequency, one for each side band of the spectrum of the AltBOC-modulated signal received and, subsequently, selection of the correct channels, namely, just the in-phase channels, containing the navigation data.

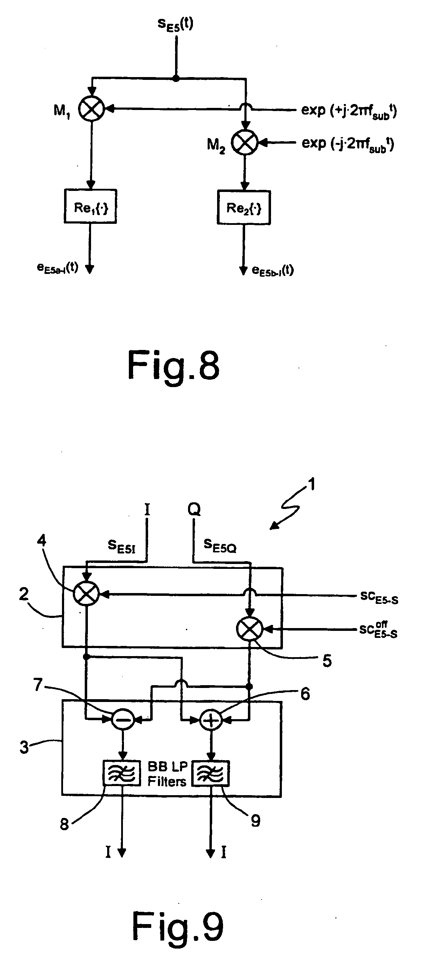

Figure 8 shows a theoretical block diagram of the technique of extraction of the in-phase components $e_{E5a-I}(t)$ and $e_{E5b-I}(t)$ of the received AltBOC-modulated signal $s_{E5}(t)$ according to the present invention.

According to what is illustrated in Figure 8, the received signal $s_{E5}(t)$ is supplied at input to a first multiplier and a second multiplier $M_1$ and $M_2$, which receive moreover at input a first complex-exponential subcarrier $e^{+j2\pi f_{sub}t}$ and, respectively, a second complex-exponential subcarrier $e^{-j2\pi f_{sub}t}$, wherein $f_{sub}$ is the frequency of the two subcarriers, and supply at output a first and output signal $s_1(t)=s_{E5(t)}\cdot e^{+j2\pi f_{sub}t}$, respectively, a second output signal $s_2(t)=s_{E5(t)}\cdot e^{-j2\pi f_{sub}t}$. This operation of multiplication of the received signal by a subcarrier causes a base-band translation from the side bands of the spectrum of the received AltBOC-modulated signal.

The two output signals $s_1(t)$ and $s_2(t)$ are then supplied at input to a first block for extracting the real part $Re_1$ and, respectively, a second block for extracting the real part $Re_2$, which supply at output the in-phase components $e_{E5a-I}(t)$ and $e_{E5b-I}(t)$.

From an implementation standpoint, observing the AltBOC-modulated signal as given in Eq. (16), it is possible to simplify its expression, neglecting the product signals defined in Eqs. (17-20). The product signals can be neglected because in Eq. (16) they are multiplied by the subcarrier $sc_{E5-P}(t)$, which has a smaller amplitude than $sc_{E5-S}(t)$. Furthermore, said product signals do not contain useful information and are present in Eq. (16) only in order to render the signal $sc_{E5}(t)$ a signal with constant envelope.

By so doing, the following simplified expression is thus obtained:

$$s_{E5}(t) = \frac{1}{2\cdot\sqrt{2}}\cdot\left[e_{E5a-I}(t)+j\cdot e_{E5a-Q}(t)\right]\cdot\left[sc_{E5-S}(t)-j\cdot sc_{E5-S}(t-T_{S,E5}/4)\right]+ \qquad (24)$$

$$\frac{1}{2\cdot\sqrt{2}}\cdot\left[e_{E5b-I}(t)+j\cdot e_{E5b-Q}(t)\right]\cdot\left[sc_{E5-S}(t)+j\cdot sc_{E5-S}(t-T_{S,E5}/4)\right] \quad .$$

By observing Eq. (24) and the spectral occupation of the AltBOC-modulated signal given in Figure 7, it is possible to conclude that the four channels $e_{E5a-I}(t)$, $e_{E5a-Q}(t)$, $e_{E5b-I}(t)$ and $e_{E5b-Q}(t)$ are transmitted in the two side sub-bands of the E5 band and that this result is obtained using the subcarrier $sc_{E5-S}(t)$, which resembles a sampled cosine, as is illustrated in Figure 5, and its delayed version $sc_{E5-S}(t-T_{S,E5}/4)$, hereinafter designated for simplicity as $sc_{E5-S}^{off}(t)$, similar to a sampled sine. From Eq. (24) it may be noted how said functions are used as complex exponentials.

In greater detail, the first exponential subcarrier is represented by the term $\left[sc_{E5-S}(t)-j\cdot sc_{E5-S}^{off}(t)\right]$, which implements an operation of frequency translation similar to the one performed by the complex exponential $e^{-j\cdot 2\pi f_{sub}t}$ of Figure 8, and, in the case of AltBOC(15,10) modulation, said translation is 15.345 MHz. This multiplication by a subcarrier causes a translation downwards of the frequency spectrum of the two channels in E5a band: the signals $e_{E5a-I}(t)$ and $e_{E5a-Q}(t)$ are translated from the base band to the left sub-band of the spectrum of the AltBOC-modulated E5 signal.

In an altogether analogous way, the second exponential subcarrier is represented by the term

$[sc_{E5-S}(t) + j \cdot sc_{E5-S}^{off}(t)]$, which implements an operation of frequency translation similar to the one performed by the complex exponential $e^{+j \cdot 2\pi f_{sub} t}$ of Figure 8. This multiplication by a subcarrier causes a translation in frequency of the two channels signals $e_{E5b-I}(t)$ and $e_{E5b-Q}(t)$ in the E5b band.

It is precisely these analogies between subcarriers and complex exponentials that enables identification of a practical implementation of the SBT technique. It must, in fact, perform operations of translation in frequency opposite with respect to the ones just described.

From Eq. (24), which gives the simplified analytical expression of the AltBOC-modulated signal $s_{E5}(t)$, it is possible to decompose the signal received $s_{E5}(t)$ into its real part $S_{E5I}(t)$ and its imaginary part $S_{E5Q}(t)$, as defined by the following equations:

$$s_{E5}(t) \quad = \quad s_{E5I}(t) + j \cdot s_{E5Q}(t) \qquad\qquad (25)$$

$$s_{E5I}(t) \quad \cong \quad \frac{1}{2 \cdot \sqrt{2}} \cdot [e_{E5a-I}(t) + e_{E5b-I}(t)] \cdot sc_{E5-S}(t) + \qquad (26)$$
$$\frac{1}{2 \cdot \sqrt{2}} \cdot [e_{E5a-Q}(t) - e_{E5b-Q}(t)] \cdot sc_{E5-S}(t - T_{S,E5}/4)$$

$$s_{E5Q}(t) \quad \cong \quad \frac{1}{2 \cdot \sqrt{2}} \cdot [e_{E5a-Q}(t) + e_{E5b-Q}(t)] \cdot sc_{E5-S}(t) + \qquad (27)$$
$$\frac{1}{2 \cdot \sqrt{2}} \cdot [e_{E5b-I}(t) - e_{E5a-I}(t)] \cdot sc_{E5-S}(t - T_{S,E5}/4)$$

In order to recover the signal $e_{E5a-I}(t)$, it is sufficient to perform a frequency translation of the AltBOC-modulated signal $s_{E5}(t)$ received, so that it will be translated into base-band and recovery thereof will be possible by means of an operation of selection the in-phase component (real part), as highlighted by the following equations:

$$e_{E5a-I}(t) \quad \cong \quad \mathrm{Re}\{[s_{E5I}(t) + j \cdot s_{E5Q}(t)] \cdot [sc_{E5-S}(t) + j \cdot sc_{E5-S}^{off}(t)]\} \qquad (28)$$

$$e_{E5a-I}(t) \cong \mathrm{Re}\{[s_{E5I}(t) \cdot sc_{E5-S}(t) - s_{E5Q}(t) \cdot sc_{E5-S}^{off}(t)] + j \cdot [s_{E5I}(t) \cdot sc_{E5-S}^{off}(t) + s_{E5Q}(t) \cdot sc_{E5-S}(t)]\} \qquad (29)$$

$$e_{E5a-I}(t) \quad \cong \quad s_{E5I}(t) \cdot sc_{E5-S}(t) - s_{E5Q}(t) \cdot sc_{E5-S}^{off}(t) \qquad (30)$$

In a way similar to what has been done for the channel $e_{E5a-I}(t)$, it is possible to recover the signal $e_{E5b-I}(t)$ by means of a downward translation in the frequency domain of the received AltBOC-modulated signal $s_{E5}(t)$, via the following operations:

$$e_{E5b-I}(t) \cong \mathrm{Re}\{[s_{E5I}(t) + j \cdot s_{E5Q}(t)] \cdot [sc_{E5-S}(t) - j \cdot sc_{E5-S}^{off}(t)]\} \qquad (31)$$

$$e_{E5b-I}(t) \cong \mathrm{Re}\{[s_{E5I}(t) \cdot sc_{E5-S}(t) + s_{E5Q}(t) \cdot sc_{E5-S}^{off}(t)] + j \cdot [s_{E5Q}(t) \cdot sc_{E5-S}(t) - s_{E5I}(t) \cdot sc_{E5-S}^{off}(t)]\} \qquad (32)$$

$$e_{E5b-I}(t) \cong s_{E5I}(t) \cdot sc_{E5-S}(t) + s_{E5Q}(t) \cdot sc_{E5-S}^{off}(t) \qquad (33)$$

Eqs. (30) and (33) define the operation of the SBT technique according to the present invention and enable a simple recovery of the in-phase components $e_{E5a-I}(t)$ and $e_{E5b-I}(t)$.

Figure 9 shows a block diagram of implementation of the SBT technique, in which the operations described by Eqs. (30) and (33) are implemented directly in the discrete-time domain, by means of multiplications and sums between samples of the signal received and waveforms of the locally generated subcarriers.

In particular, designated as a whole by 1 in Figure 9 is a block for extracting the in-phase components $e_{E5a-I}(t)$ and $e_{E5b-I}(t)$ of the AltBOC-modulated signal received $s_{E5}(t)$.

The extractor block 1 comprises a frequency-translator stage 2 implementing the SBT technique according to the present invention, followed by an extractor stage 3 proper.

The frequency-translator stage 2 comprises a first multiplier 4 and a second multiplier 5, which receive at input, respectively, the in-phase and quadrature components $s_{E5I}(t)$ and $s_{E5Q}(t)$ of the AltBOC-modulated signal received $s_{E5}(t)$, which are recovered by the receiver in a known way and hence not described in detail. The multipliers 4, 5 moreover receive at input, respectively, the signals $sc_{E5-S}(t)$ and $sc_{E5-S}^{off}(t)$ and supply, respectively, at output a first intermediate signal $s_1(t) = s_{E5I}(t) \cdot sc_{E5-S}(t)$ and a second intermediate signal $s_1(t) = s_{E5I}(t) \cdot sc_{E5-S}(t)$ This operation of multiplication of the in-phase and quadrature components $s_{E5I}(t)$ and $s_{E5Q}(t)$ of the AltBOC-modulated signal received $s_{E5}(t)$ by the two signals $sc_{E5-S}(t)$ and $s_2(t) = s_{E5Q}(t) \cdot sc_{E5-S}^{off}(t)$ . causes a base-band translation from the side bands of the spectrum of the AltBOC-modulated signal received.

The extractor stage 3 comprises an adder 6 and a subtractor 7 both receiving at input the first and second intermediate signals $S_1(t) = S_{E5I}(t) \cdot SC_{E5-S}(t)$ and $s_2(t) = s_{E5Q}(t) \cdot sc_{E5-S}^{off}(t)$ and supplying at output, respectively, an addition signal $S(t) = s_{E5I}(t) \cdot sc_{E5-S}(t) + s_{E5Q}(t) \cdot sc_{E5-S}^{off}(t)$ and a difference signal $D(t) = s_{E5I}(t) \cdot sc_{E5-S}(t) - s_{E5Q}(t) \cdot sc_{E5-S}^{off}(t)$ .

The extractor stage 3 moreover comprises a first base-band low-pass (BB LP) filter 8 and a second base-band low-pass (BB LP) filter 9, which receive at input, respectively, the addition signal $S(t)$ and the difference signal $D(t)$ and supply at output, respectively, the in-phase components $e_{E5a-I}(t)$ and $e_{E5b-I}(t)$ of the AltBOC-modulated signal received $s_{E5}(t)$.

The form and bandwidth of the filters must be optimized so as to achieve a compromise between the performance of the demodulation section and the reduction in the interference and the cross-correlation with the adjacent channels: in fact, an excessively narrow filtering reduces the performance of the demodulation section, worsening the properties of correlation of the two data channels, but an excessively wide filtering may prove disadvantageous in the presence of noise and interference.

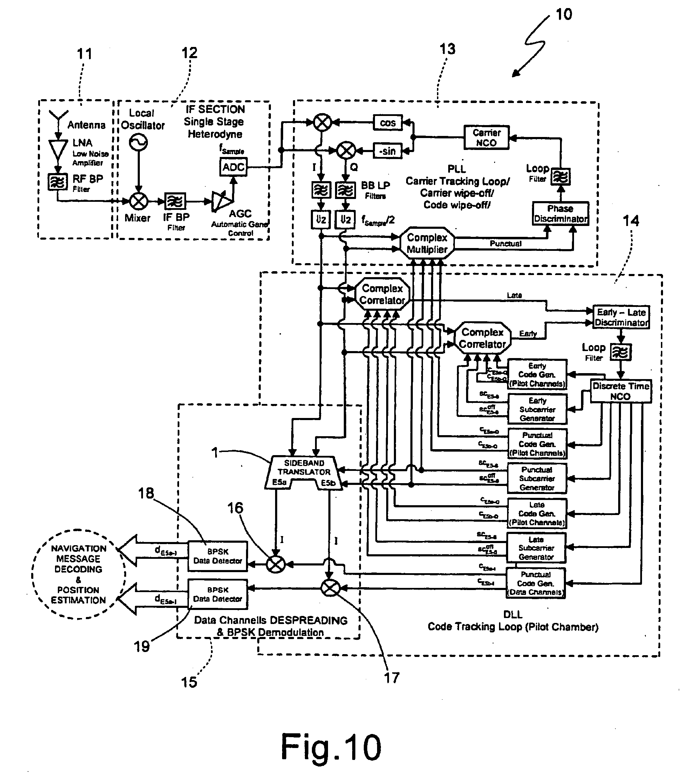

Once the in-phase components $e_{E5a-I}(t)$ and $e_{E5b-I}(t)$ of the AltBOC-modulated signal received $s_{E5}(t)$ have been extracted, it is hence possible to recover the navigation data from said signals by means of known operations, which are hence not described in detail, of despreading and BPSK demodulation on said in-phase components, as illustrated schematically in Figure 10.

In particular, Figure 10 represents a high-level block diagram of the architecture of a receiver of AltBOC-modulated signals implementing the SBT technique according to the present invention. The details of implementation regarding the operations of complex correlation and discrimination, in addition to possible optimizations of the architecture itself of the receiver, are not given herein, in so far as they belong to the known art.

In particular, the receiver, designated as a whole by 10, comprises a radiofrequency (RF) stage 11, an intermediate-frequency (IF) stage 12, a phase-locked loop (PLL) 13, a delay-locked loop (DLL) 14, and a demodulation stage 15, which in turn comprises the extractor block 1 of Figure 9, two multipliers 16 and 17 designed to carry out despreading of the PRN sequences, and two BPSK demodulators 18 and 19 designed to demodulate the data.

The main differences between a receiver for AltBOC-modulated signals and a standard GPS receiver lie in the operations carried out by the various blocks:

- the phase-locked loop (PLL) 13 is used for coherent tracking of a central frequency of the E5 band (1191.795 MHz), separating the in-phase (I) and quadrature (Q) components of the signal received (components $s_{E5I}(t)$ and $s_{E5Q}(t)$, respectively);
- the delay-locked loop (DLL) 14 is used for recovering the synchronism of the PRN sequences and, subsequently, the synchronism of the data symbols. It may be noted that the four channels present in the E5 band are emitted by each Galileo satellite in a coherent way, i.e., without any relative temporal phase shifts or "chip-slip". The operation of the DLL is based upon tracking of the two pilot channels, $e_{E5a-Q}$ and $e_{E5b-Q}$. This occurs by generating local replicas of the PRN sequences used for the pilot channels $C_{E5a-I}$ and $C_{E5b-I}$, as well as local replicas of the subcarrier $sc_{E5-S}$ and of its time-delayed version, $sc_{E5-S}^{off}(t)$. These local signals are used for carrying out complex operations of correlation with the samples I and Q received. It may also be noted that the tracking operations can be performed using different types of discriminators. Provided in Figure 10, purely by way of example, is the "Early-Late discriminator"; and
- the demodulation stage 15 recovers the navigation data from the two data channels $e_{E5a-I}$ and $e_{E5b-I}$, exploiting the synchronism recovered by the DLL. In particular, it is necessary to carry out "despreading" with the local replicas of the PRN sequences used for the data channels $C_{E5a-I}$ and $C_{E5b-I}$, in addition to extraction of the data from the signals thus obtained.

The demodulation section based upon the SBT technique is innovative with respect to the state of the art. The main characteristics can be summarized in the following points:

- the two channels $e_{E5a-I}(t)$ and $e_{E5b-I}(t)$ of the E5 band of the Galileo system are recovered starting from the idea of performing two frequency translations of the signal received;

- the frequency translations are made using real signals, obtained with local replicas of the waveforms $sc_{E5-S}(t)$ and $sc_{E5-S}^{off}(t)$ of the AltBOC subcarriers;

- the two signals obtained via said operations of frequency translation can be filtered separately so as to reduce the interference and cross-correlations with adjacent channels; and
- the navigation data are recovered separately as two BPSK signals, by performing operations of despreading and demodulation.

The aforementioned characteristics result in a series of practical advantages as compared to known demodulation techniques:

- a more simple processing of the signal, which results in a saving of hardware and software resources, since the navigation data are extracted directly from the outputs of the SBT, without any need for further calculations for decoding the data starting from their sum and difference;
- an increase in the performance of the receiver, by avoiding the correlation losses in the demodulation section; in fact, locally generated in the architecture of the receiver proposed (see Figure 10) are the corrected waveforms of the subcarriers $sc_{E5-S}(t)$ and $sc_{E5-S}^{off}(t)$, used for performing the frequency translations;
- a greater robustness of the demodulation section, since an error in one data bit of a channel, for example caused by a signal interfering on the E5a band does not affect correct demodulation of the other data channel, because said two data channels are translated in frequency and demodulated separately, thanks to the SBT;
- a better resilience to interference, because the two low-pass filters in the SBT enable reduction of out-of-band interfering signals and cross-correlations caused by PRN sequences of adjacent channels;
- a better flexibility for operation of the demodulation section. In fact, it is possible to demodulate temporarily just one data channel, switching off the demodulation on the other channel, saving power or reusing the hardware and software dedicated to the channel that it is not intended to demodulate. Said function is particularly useful in the case, for example, of conditions in which the navigation data of both of the channels are not necessary.

The advantages listed as compared to technologies known in the state of the art render the invention forming the subject of the present application particularly suitable to uses in professional receivers for Galileo AltBOC signals, based upon coherent reception and processing of the entire Galileo E5 band.

**Claims**

1. A method for demodulating AltBOC-modulated signals, an AltBOC-modulated signal $(s_{E5}(t))$ comprising a first signal and a second signal $(e_{E5a}(t), e_{E5b}(t))$ each having an in-phase component $(e_{E5a-I}(t), e_{E5b-I}(t))$ and a quadrature component $(e_{E5a-Q}(t), e_{E5b-Q}(t))$ ; said method comprising:

   - extracting an in-phase component $(s_{E5I}(t))$ and a quadrature component $(s_{E5Q}(t))$ of said AltBOC-modulated signal $(s_{E5}(t))$; and
   - extracting said in-phase components $(e_{E5a-I}(t), e_{E5b-I}(t))$ of said first and second signals $(e_{E5a}(t), e_{E5b}(t))$ from said in-phase and quadrature component $(s_{E5I}(t), s_{e5Q}(t))$ of said AltBOC-modulated signal $(s_{E5}(t))$;

   wherein said AltBOC-modulated signal $(s_{E5}(t))$ is mathematically expressible as a summation in which one.of the addenda is constituted by the product of a first term containing said in-phase and quadrature components $(e_{E5a-I}(t), e_{E5a-Q}(t))$ of said first signal $(e_{E5a}(t))$ and of a second term containing a first subcarrier and a second subcarrier $(sc_{E5-s}(t), sc_{E5-S}^{off}(t))$ , and another of said addenda is constituted by the product of a third term containing said in-phase and quadrature components $(e_{E5b-I}(t), e_{E5b-Q}(t))$ of said second signal $(e_{E5b}(t))$ and of a fourth term containing said first and second subcarriers $(sc_{E5-S}(t), sc_{E5-S}^{off}(t))$ ;

   wherein extraction of said in-phase components $(e_{E5a-I}(t), e_{E5b-I}(t))$ of said first and second signals $(e_{E5a}(t), e_{E5b}(t))$ is performed using said first and second subcarriers $(sc_{E5-S}(t), sc_{E5-S}^{off}(t))$ .

2. The method according to Claim 1, wherein extracting said in-phase components $(e_{E5a-I}(t), e_{E5b-I}(t))$ of said first and second signals $(e_{E5a}(t), e_{E5b}(t))$ comprises:

   - multiplying said in-phase and quadrature components $(s_{E5I}(t), s_{E5Q}(t))$ of said AltBOC-modulated signal $(s_{E5}(t))$ by said first and second subcarriers $(sc_{E5-S}(t), sc_{E5-S}^{off}(t))$ , respectively, thus obtaining a first intermediate signal and a second intermediate signal.

3. The method according to Claim 2, wherein said second subcarrier $(sc_{E5-S}^{off}(t))$ is a delayed version of said first subcarrier $(sc_{E5-S}(t))$ .

4. The method according to Claim 3, wherein the delay between said first and second subcarriers $(sc_{E5-S}(t), sc_{E5-S}^{off}(t))$ is equal to one quarter of a period of said first subcarrier.

5. The method according to any one of Claims 2 to 4, wherein extracting said in-phase components $(e_{E5a-I}(t), e_{E5b-I}(t))$ of said first and second signals $(e_{E5a}(t), e_{E5b}(t))$ further comprises:

   - adding said first and second intermediate signals, obtaining an addition signal;
   - subtracting said first and second intermediate signals, obtaining a difference signal;
   - filtering said addition and difference signals, thus obtaining said in-phase components $(e_{E5a-I}(t), e_{E5b-I}(t))$ of said first and second signals $(e_{E5a}(t), e_{E5b}(t))$.

6. The method according to Claim 5, wherein said addition and difference signals are filtered by means of base-band, low-pass filters.

7. The method according to Claim 3 or Claim 4, wherein said first and second subcarriers $(sc_{E5-S}(t),\ sc^{off}_{E5-S}(t))$ have the following equations:

$$sc_{E5-S}(t) = \sum_{i=+\infty}^{-\infty} AS_{|i|_8} \cdot rect_{T_{S,E5}/8}\left(t - i \cdot T_{s,E5}/8\right)$$

$$sc^{off}_{E5-S}(t) = sc_{E5-S}\left(t - T_{S,E5}/4\right)$$

wherein:

- $sc_{E5-S}(t)$ is said first subcarrier;

- $sc^{off}_{E5-S}(t)$ is said second subcarrier;

- $AS|_{i|_g}$, is a multiplicative coefficient;
- $T_{S,E5}$ is the period of said first and second subcarriers;
- $rect$ is a boxcar function with period $T_{S,E5}/8$.

8. A receiver (10) for AltBOC-modulated signals, an AltBOC-modulated signal $(s_{E5}(t))$ comprising a first signal $(e_{E5a}(t))$ and a second signal $(e_{E5b}(t))$ each having an in-phase component $(e_{E5a-I}(t), e_{E5b-I}(t))$ and a quadrature component $(e_{E5a-Q}(t), e_{E5b-Q}(t))$; said receiver (10) comprising:

- first extraction means (13) configured to receive said AltBOC-modulated signal $(s_{E5}(t))$, and to extract an in-phase component $(s_{E5I}(t))$ and a quadrature component $(s_{E5Q}(t))$ of said AltBOC-modulated signal $(s_{E5}(t))$; and
- second extraction means (1) configured to receive said in-phase and quadrature components $(s_{E5I}(t), s_{E5Q}(t))$ of said AltBOC-modulated signal $(s_{E5}(t))$, and to extract said in-phase components $(e_{E5a-I}(t), e_{E5b-I}(t))$ of said first and second signals $(e_{E5a}(t), e_{E5b}(t))$ from said in-phase and quadrature components $(s_{E5I}(t), s_{E5Q}(t))$ of said AltBOC-modulated signal $(s_{E5}(t))$;

wherein said AltBOC-modulated signal $(s_{E5}(t))$ is mathematically expressible as a summation in which one of the addenda is constituted by the product of a first term containing said in-phase and quadrature components $(e_{E5a-I}(t), e_{E5a-Q}(t))$ of said first signal $(e_{E5a}(t))$ and of a second term containing a first subcarrier and a second subcarrier $(sc_{E5-S}(t),\ sc^{off}_{E5-S}(t))$, and another of said addenda is constituted by the product of a third term containing said in-phase and quadrature components $(e_{E5b-I}(t), e_{E5b-Q}(t))$ of said second signal $(e_{E5b}(t))$ and of a fourth term containing said first and second subcarriers $(sc_{E5-S}(t),\ sc^{off}_{E5-S}(t))$;

and wherein said second extraction means (1) are further configured to receive said first and second subcarriers $(sc_{E5-S}(t),\ sc^{off}_{E5-S}(t))$, and to extract said in-phase components $(e_{E5a-I}(t)\ e_{E5b-I}(t))$ of said first and second signals $(e_{E5a}(t), e_{E5b}(t))$ using said first and second subcarriers $(sc_{E5-S}(t),\ sc^{off}_{E5-S}(t))$.

9. The receiver according to Claim 8, wherein said second subcarrier $(sc^{off}_{E5-S}(t))$ is a delayed version of said first subcarrier $(sc_{E5-S}(t))$.

10. The receiver according to Claim 9, wherein the delay between said first and second subcarriers $(sc_{E5-S}(t), sc^{off}_{E5-S}(t))$ is equal to one quarter of a period of said first subcarrier.

**11.** The receiver according to any one of Claims 8 to 10, wherein said first and second subcarriers $(sc_{E5\text{-}S}(t),\ sc^{off}_{E5\text{-}S}(t))$ have the following equations:

$$sc_{E5\text{-}S}(t) = \sum_{i=+\infty}^{-\infty} AS_{|i|_8} \cdot rect_{T_{S,E5}/8}(t - i \cdot T_{s,E5}/8);$$

$$sc^{off}_{E5\text{-}S}(t) = sc_{E5\text{-}S}(t - T_{S,E5}/4)$$

wherein:

- $sc_{E5\text{-}S}(t)$ is said first subcarrier;

- $sc^{off}_{E5\text{-}S}(t)$ is said second subcarrier;

- $AS_{|i|_g}$ is a multiplicative coefficient;
- $T_{S,E5}$ is the period of said first and second subcarriers;
- $rect$ is a boxcar function with period $T_{S,E5}/8$.

**12.** The receiver according to any one of Claims 8 to 10, wherein said second extraction means (1) comprise:

- multiplying means (4, 5) configured to multiply said in-phase and quadrature components $(s_{E5I}(t),\ s_{E5Q}(t))$ of said AltBOC-modulated signal $(s_{E5}(t))$ by said first and second subcarriers $(sc_{E5\text{-}S}(t),\ sc^{off}_{E5\text{-}S}(t))$, respectively, thus obtaining a first intermediate signal and a second intermediate signal.

**13.** The receiver Claim 12, wherein said second extraction means (1) further comprise:

- adding means (6) configured to add said first and second intermediate signals, obtaining an addition signal;
- subtracting means (7) configured to subtract said first and second intermediate signals, obtaining a difference signal; and
- filtering means (8, 9) configured to filter said addition and difference signals, thus recovering said in-phase components $(e_{E5a\text{-}I}(t),\ e_{E5b\text{-}I}(t))$ of said first and second signals $(e_{E5a}(t),\ e_{E5b}(t))$.

**14.** The receiver according to Claim 13, wherein said filtering means comprise base-band, low-pass filters (8, 9).

**15.** A computer program product loadable into a receiver (10) for AltBOC-modulated signals, and designed to implement, when executed, the demodulation method according to any one of Claims 1 to 7.

**Patentansprüche**

**1.** Verfahren zum Demodulieren von AltBOC-modulierten Signalen, wobei ein AltBOC-moduliertes Signal $(s_{E5}(t))$ ein erstes Signal und ein zweites Signal $(e_{E5a}(t),\ e_{E5b}(t))$ umfasst, welche jeweils eine In-Phase-Komponente $(e_{E5a\text{-}I}(t),\ e_{E5b\text{-}I}(t))$ und eine Quadraturkomponente $(e_{E5a\text{-}Q}(t),\ e_{E5b\text{-}Q}(t))$ aufweisen; wobei das Verfahren folgendes umfasst:

- Extrahieren einer In-Phase-Komponente $(s_{E5I}(t))$ und einer Quadraturkomponente $(s_{E5Q}(t))$ des AltBOC-modulierten Signals $(s_{E5}(t))$; und
- Extrahieren der In-Phase-Komponenten $(e_{E5a\text{-}I}(t),\ e_{E5b\text{-}I}(t))$ des ersten und des zweiten Signals $(e_{E5a}(t),\ e_{E5b}(t))$ von der In-Phase- und der Quadratur-Komponente $(s_{E5I}(t),\ s_{E5Q}(t))$ des AltBOC-modulierten Signals $(s_{E5}(t))$;

wobei das AltBOC-moduliertes Signal $(s_{E5}(t))$ mathematisch als Summe ausdrückbar ist, in welcher einer der Summanden durch das Produkt eines ersten Terms enthaltend die In-Phase- und die Quadratur-Komponente $(e_{E5a\text{-}I}(t), e_{E5a\text{-}Q}(t))$ des ersten Signals $(e_{E5a}(t))$ mit einem zweiten Term enthaltend einen ersten Unterträger und einen zweiten Unterträger $(sc_{E5\text{-}S}(t), sc_{E5\text{-}S}^{off}(t))$ bestimmt ist, und in welcher ein anderer Summand durch das Produkt eines dritten Terms enthaltend die In-Phase- und die Quadratur-Komponente $(e_{E5b\text{-}I}(t), e_{E5b\text{-}Q}(t))$ des zweiten Signals $(e_{E5b}(t))$ mit einem vierten Term enthaltend den ersten und den zweiten Unterträger $(sc_{E5\text{-}S}(t), sc_{E5\text{-}S}^{off}(t))$ bestimmt ist;

wobei die Extraktion der In-Phase-Komponenten $(e_{E5a\text{-}I}, e_{E5b\text{-}I}(t))$ des ersten und des zweiten Signals $(e_{E5a}(t), e_{E5b}(t))$ unter Verwendung des ersten und des zweiten Unterträgers $(sc_{E5\text{-}S}(t), sc_{E5\text{-}S}^{off}(t))$ durchgeführt wird.

2. Verfahren nach Anspruch 1, wobei das Extrahieren der In-Phase-Komponenten $(e_{E5a\text{-}I}(t), e_{E5b\text{-}I}(t))$ des ersten und des zweiten Signals $(e_{E5a}(t), e_{E5b}(t))$ folgendes umfasst:

- Multiplizieren der In-Phase- und der Quadratur-Komponente $(s_{E5I}(t), s_{E5Q}(t))$ des AltBOC-modulierten Signals $(s_{E5}(t))$ mit dem ersten beziehungsweise dem zweiten Unterträger $(sc_{E5\text{-}S}(t), sc_{E5\text{-}S}^{off}(t))$, wodurch ein erstes Zwischensignal und ein zweites Zwischensignal erhalten wird.

3. Verfahren nach Anspruch 2, wobei der zweite Unterträger $(sc_{E5\text{-}S}^{off}(t))$ eine verzögerte Version des ersten Unterträgers $(sc_{E5\text{-}S}(t))$ ist.

4. Verfahren nach Anspruch 3, wobei die Verzögerung zwischen dem ersten und dem zweiten Unterträger $(sc_{E5\text{-}S}(t), sc_{E5\text{-}S}^{off}(t))$ gleich einem Viertel einer Periode des ersten Unterträgers ist.

5. Verfahren nach einem der Ansprüche 2 bis 4, wobei das Extrahieren der In-Phase-Komponenten $(e_{E5a\text{-}I}(t), e_{E5b\text{-}I}(t))$ des ersten und des zweiten Signals $(e_{E5a}(t), e_{E5b}(t))$ ferner umfasst:

- Addieren des ersten und des zweiten Zwischensignals, Erhalten eines Additionssignals;
- Subtrahieren des ersten und des zweiten Zwischensignals, Erhalten eines Differenzsignals;
- Filtern des Additions- und des Differenzsignals, wodurch die In-Phase-Komponenten $(e_{E5a\text{-}I}(t), e_{E5b\text{-}I}(t))$ des ersten und des zweiten Signals $(e_{E5a}(t), e_{E5b}(t))$ erhalten werden.

6. Verfahren nach Anspruch 5, wobei das Additions- und das Differenzsignal mittels Basisband-, Tiefpassfilter gefiltert werden.

7. Verfahren nach Anspruch 3 oder 4, wobei der erste und der zweite Unterträger $(sc_{E5\text{-}S}(t), sc_{E5\text{-}S}^{off}(t))$ die folgenden Gleichungen aufweisen:

$$sc_{E5\text{-}S}(t) = \sum_{i=+\infty}^{-\infty} AS_{\lfloor i \rfloor_8} \cdot rect_{T_{s,E5}/8}(t - i \cdot T_{s,E5}/8)$$

$$sc_{E5\text{-}S}^{off}(t) = sc_{E5\text{-}S}(t - T_{S,E5}/4)$$

wobei:

- $sc_{E5\text{-}S}(t)$ der erste Unterträger;

- $sc_{E5\text{-}S}^{off}(t)$ der zweite Unterträger:
- $AS_{\lfloor i \rfloor_g}$ ein Multiplikationskoeffizient:

- $T_{S,E5}$ die Periode des ersten und des zweiten Unterträgers;
- *rect* eine Boxcar-Funktion mit einer Periode $T_{S,E5}/8$ ist.

8. Empfänger (10) für AltBOC-modulierte Signale, wobei ein AltBOC-moduliertes Signal *(s$_{E5}$(t))* ein erstes Signal *(e$_{E5a}$(t))* und ein zweites Signal *(e$_{E5b}$(t))* umfasst, die jeweils eine In-Phase-Komponente *(e$_{E5aI}$(t), e$_{E5b-I}$(t))* und eine Quadratur-Komponente *(e$_{E5a-Q}$(t), e$_{E5b-Q}$(t))* aufweisen; wobei der Empfänger (10) folgendes umfasst:

- ein erstes Extraktionsmittel (13), das zum Empfang des AltBOC-modulierten Signals *(s$_{E5}$(t))* und zur Extraktion einer In-Phase-Komponente *((s$_{E5I}$(t))* und einer Quadratur-Komponente *(s$_{E5Q}$(t))* des AltBOC-modulierten Signals *(s$_{E5}$(t))* ausgebildet ist; und
- ein zweites Extraktionsmittel (I), das zum Empfang der In-Phase- und der Quadratur-Komponente *(s$_{E5I}$(t), s$_{E5Q}$(t))* des AltBOC-modulierten Signals *((s$_{E5}$(t))* und zur Extraktion der in-Phase-Komponenten *(e$_{E5a-I}$(t), e$_{E5b-I}$(t))* des ersten und des zweiten Signals *(e$_{E5a}$(t), e$_{E5b}$(t))* von der In-Phase- und der Quadratur-Komponente *(s$_{E5I}$(t), s$_{E5Q}$(t))* des AltBOC-modulierten Signals *(s$_{E5}$(t))* ausgebildet ist;

wobei das AltBOC-modulierte Signal *(s$_{E5}$(t))* mathematisch als Summe ausdrückbar ist, in welcher einer der Summanden durch das Produkt eines ersten Terms enthaltend die In-Phase und die Quadraturkomponente *(e$_{E5a-I}$(t), e$_{E5a-Q}$(t))* des ersten Signals *(e$_{E5a}$(t))* mit einem zweiten Term enthaltend einen ersten Unterträger und einen zweiten Unterträger *(sc$_{E5-S}$(t), $sc_{E5-S}^{off}(t)$)* bestimmt ist, und in welcher ein anderer Summand durch das Produkt eines dritten Terms enthaltend die In-Phase- und die Quadratur-Komponente *(e$_{E5b-I}$(t), e$_{E5b-Q}$(t))* des zweiten Signals *(e$_{E5b}$(t))* mit einem vierten Term enthaltend den ersten und den zweiten Unterträger *(sc$_{E5-s}$(t), $sc_{E5-S}^{off}(t)$)* bestimmt ist;
und wobei das erste Extraktionsmittel (1) ferner zum Empfang des ersten und des zweiten Unterträgers *(sc$_{E5-s}$(t), $sc_{E5-S}^{off}(t)$)* und zur Extraktion der In-Phase-Komponenten *(e$_{E5a-I}$(t), e$_{E5b-I}$(t))* des ersten und des zweiten Signals *(e$_{E5a}$(t), e$_{E5b}$(t))* unter Verwendung des ersten und des zweiten Unterträgers *(sc$_{E5-s}$(t), $sc_{E5-S}^{off}(t)$* ausgebildet ist.

9. Empfänger nach Anspruch 8, wobei der zweite Unterträger $sc_{E5-S}^{off}(t)$ eine verzögerte Version des ersten Unterträgers *(sc$_{E5-s}$(t))* ist.

10. Empfänger nach Anspruch 9, wobei die Verzögerung zwischen dem ersten und dem zweiten Unterträger *(sc$_{E5-S}$(t), $sc_{E5-S}^{off}(t)$)* gleich einem Viertel einer Periode des ersten Unterträgers ist.

11. Empfänger nach einem der Ansprüche 8 bis 10, wobei der erste und der zweite Unterträger *(sc$_{E5-S}$(t), $sc_{E5-S}^{off}(t)$)* die folgenden Gleichungen aufweisen:

$$sc_{E5\text{-}S}(t) = \sum_{i=+\infty}^{-\infty} AS_{|i|_8} \cdot rect_{T_{s,E5}/8}(t - i \cdot T_{s,E5}/8);$$

$$sc_{E5-S}^{off}(t) = sc_{E5\text{-}S}(t - T_{S,E5}/4)$$

wobei:

- $sc_{E5-S}(t)$ der erste Unterträger;

- $sc_{E5-S}^{off}(t)$ der zweite Unterträger;

- $AS|_{t|_g}$ ein Multiplikationskoeffizient;
- $T_{s,E5}$ die Periode des ersten und des zweiten Unterträgers;
- rect eine Boxcar-Funktion mit einer Periode $T_{s,E5}/8$ ist.

**12.** Empfänger nach einem der Ansprüche 8 bis 10, wobei das zweite Extraktionsmittel (1) folgendes umfasst:

- Multiplikationsmittel (4, 5), die zur Multiplikation der In-Phase- und der Quadratur-Komponente ($s_{E5I}(t)$, $s_{E5Q}(t)$) des AltBOC-modulierten Signals ($s_{E5}(t)$) mit dem ersten beziehungsweise dem zweiten Unterträger ($sc_{E5-S}(t)$, $sc_{E5-S}^{off}(t)$) ausgebildet sind, wodurch ein erstes Zwischensignal und ein zweites Zwischensignal erhalten wird.

**13.** Empfänger nach Anspruch 12, wobei das zweite Extraktionsmittel (1) ferner umfasst:

- ein Addiermittel (6), das zur Addition des ersten und des zweiten Zwischensignals zum Erhalten eines Additionssignals ausgebildet ist;
- ein Substraktionsmittel (7), das zum Subtrahieren des ersten und des zweiten Zwischensignals zum Erhalten eines Differenzsignals ausgebildet ist; und
- Filtermittel (8, 9), die zum Filtern des Additions- und des Differenz-Signals zum Zurückgewinnen der In-Phase-Komponenten ($e_{E5a-I}(t)$, $e_{E5b-I}(t)$) des ersten und des zweiten Signals ($e_{E5a}(t)$, $e_{E5b}(t)$) ausgebildet sind.

**14.** Empfänger nach Anspruch 13, wobei die Filtermittel Basisband-, Tiefpassfilter (8, 9) umfassen.

**15.** Computerprogramm-Produkt, das in einen Empfänger (10) für AltBOC-modulierte Signale ladbar ist, und dazu ausgebildet ist, das Demodulationsverfahren nach einem der Ansprüche 1 bis 7 zu implementieren, wenn es ausgeführt wird.

**Revendications**

**1.** Procédé de démodulation de signaux modulés AltBOC, un signal modulé AltBOC ($S_{E5}(t)$) comprenant un premier signal et un deuxième signal ($e_{E5a}(t)$, $e_{E5b}(t)$) ayant chacun une composante en phase ($e_{E5a-I}(t)$, $e_{E5b-I}(t)$) et une composante en quadrature ($e_{E5a-Q}(t)$, $e_{E5b-Q}(t)$) ; ledit procédé comprenant :

- l'extraction d'une composante en phase ($S_{E5I}(t)$) et d'une composante en quadrature ($S_{E5Q}(t)$) dudit signal modulé AltBOC ($S_{E5}(t)$) ; et
- l'extraction desdites composantes en phase ($e_{E5a-I}(t)$, $e_{E5b-I}(t)$) desdits premier et deuxième signaux ($e_{E5a}(t)$, $e_{E5b}(t)$) depuis lesdites composantes en phase et en quadrature ($S_{E5I}(t)$, $S_{E5Q}(t)$) dudit signal modulé AltBOC ($S_{E5}(t)$);

dans lequel ledit signal modulé AltBOC ($S_{E5}(t)$) peut être exprimé mathématiquement par une somme dans laquelle l'un des addendes est constitué par le produit d'un premier terme contenant lesdites composantes en phase et en quadrature ($e_{E5a-I}(t)$, $e_{E5a-Q}(t)$) dudit premier signal ($e_{E5a}(t)$) et d'un deuxième terme contenant une première sous-porteuse et une deuxième sous-porteuse ($SC_{E5-S}(t)$, $SC_{E5-S}^{off}(t)$),, et un autre desdits addendes est constitué par le produit d'un troisième terme contenant lesdites composantes en phase et en quadrature ($e_{E5b-I}(t)$, $e_{E5b-Q}(t)$) dudit deuxième signal ($e_{E5b}(t)$) et d'un quatrième terme contenant lesdites première et deuxième sous-porteuses ($SC_{E5-S}(t)$, $SC_{E5-S}^{off}(t)$) ;

dans lequel l'extraction desdites composantes en phase ($e_{E5a-I}(t)$, $e_{E5b-I}(t)$) desdits premier et deuxième signaux ($e_{E5a}(t)$, $e_{E5b}(t)$) est effectuée au moyen desdites première et deuxième sous-porteuses ($SC_{E5-S}(t)$, $SC_{E5-S}^{off}(t)$).

**2.** Procédé selon la revendication 1, dans lequel l'extraction desdites composantes en phase ($e_{E5a-I}(t)$, $e_{E5b-I}(t)$) desdits premier et deuxième signaux ($e_{E5a}(t)$, $e_{E5b}(t)$) comprend :

- la multiplication desdites composantes en phase et en quadrature ($S_{E5I}(t)$, $S_{E5Q}(t)$) dudit signal modulé AltBOC ($S_{E5}(t)$) par, respectivement, lesdites première et deuxième sous-porteuses ($SC_{E5-S}(t)$, $SC_{E5-S}^{off}(t)$), pour ainsi obtenir un premier signal intermédiaire et un deuxième signal intermédiaire.

**3.** Procédé selon la revendication 2, dans lequel ladite deuxième sous-porteuse $(SC_{E5-S}^{off}(t))$ est une version retardée de ladite première sous-porteuse ($SC_{E5-S}(t)$).

**4.** Procédé selon la revendication 3, dans lequel le retard entre lesdites première et deuxième sous-porteuses ($SC_{E5-S}(t)$, $SC_{E5-S}^{off}(t)$) est égal à un quart d'une période de ladite première sous-porteuse.

**5.** Procédé selon l'une quelconque des revendications 2 à 4, dans lequel l'extraction desdites composantes en phase ($e_{E5a-I}(t)$, $e_{E5b-I}(t)$) desdits premier et deuxième signaux ($e_{E5a}(t)$, $e_{E5b}(t)$) comprend, en outre :

- l'addition desdits premier et deuxième signaux intermédiaires, pour obtenir un signal d'addition ;
- la soustraction desdits premier et deuxième signaux intermédiaires, pour obtenir un signal de différence ;
- la filtration desdits signaux d'addition et de soustraction, pour ainsi obtenir lesdites composantes en phase ($e_{E5a-I}(t)$, $e_{E5b-I}(t)$) desdits premier et deuxième signaux ($e_{E5a}(t)$, $e_{E5b}(t)$).

**6.** Procédé selon la revendication 5, dans lequel lesdits signaux d'addition et de soustraction sont filtrés au moyen de filtres passe-bas en bande de base.

**7.** Procédé selon la revendication 3 ou la revendication 4, dans lequel les première et deuxième sous-porteuses ($SC_{E5-S}(t)$, $SC_{E5-S}^{off}(t)$) ont les équations suivantes :

$$sc_{E5-S}(t) = \sum_{i=-\infty}^{+\infty} AS_{|i|_8} \cdot rect_{T_{S,E5}/8}\left(t - i \cdot T_{s,E5}/8\right)$$

$$sc_{E5-S}^{off}(t) = sc_{E5-S}\left(t - T_{S,E5}/4\right)$$

où :

- $SC_{E5-S}(t)$ est ladite première sous-porteuse ;

- $SC_{E5-S}^{off}(t)$ est ladite deuxième sous-porteuse ;

- $AS_{|i|_8}$ est un coefficient multiplicateur ;
- $T_{S,E5}$ *est* la période desdites première et deuxième sous-porteuses ;
- *rect* est une fonction d'échantillonnage monocanal ayant une période $T_{S,E5}/8$.

**8.** Récepteur (10) pour des signaux modulés AltBOC, un signal modulé AltBOC ($S_{E5}(t)$) comprenant un premier signal et un deuxième signal ($e_{E5a}(t)$, $e_{E5b}(t)$) ayant chacun une composante en phase ($e_{E5a-I}(t)$, $e_{E5b-I}(t)$) et une composante en quadrature ($e_{E5a-Q}(t)$, $e_{E5b-Q}(t)$) ; ledit récepteur (10) comprenant :

- des premiers moyens d'extraction (13) configurés pour recevoir ledit signal modulé AltBOC ($S_{E5}(t)$) et pour extraire une composante en phase ($S_{E5I}(t)$) et une composante en quadrature ($S_{E5Q}(t)$) dudit signal modulé AltBOC ($S_{E5}(t)$) *;* et
- des deuxièmes moyens d'extraction (1) configurés pour recevoir lesdites composantes en phase et en quadrature ($S_{E5I}(t)$, $S_{E5Q}(t)$) dudit signal modulé AltBOC ($S_{E5}(t)$) et pour extraire lesdites composantes en phase ($e_{E5a-I}(t)$, $e_{E5b-I}(t)$) desdits premier et deuxième signaux ($e_{E5a}(t)$, $e_{E5b}(t)$) depuis lesdites composantes en phase et en quadrature ($S_{E5I}(t)$, $S_{E5Q}(t)$) dudit signal modulé AltBOC ($S_{E5}(t)$) ;

dans lequel ledit signal modulé AltBOC ($S_{E5}(t)$) peut être exprimé mathématiquement par une somme dans laquelle l'un des addendes est constitué par le produit d'un premier terme contenant lesdites composantes en phase et en quadrature ($e_{E5a-I}(t)$, $e_{E5a-Q}(t)$) dudit premier signal ($e_{E5a}(t)$) et d'un deuxième terme contenant une première sous-porteuse et une deuxième sous-porteuse ($SC_{E5-S}(t)$, $SC_{E5-S}^{off}(t)$), et un autre desdits addendes est constitué par le produit d'un troisième terme contenant lesdites composantes en phase et en quadrature ($e_{E5b-I}(t)$, $e_{E5b-Q}(t)$) dudit deuxième signal ($e_{E5b}(t)$) et d'un quatrième terme contenant lesdites première et deuxième sous-porteuses ($SC_{E5-S}(t)$, $SC_{E5-S}^{off}(t)$) ;

et dans lequel lesdits deuxièmes moyens d'extraction (1) sont, en outre, configurés pour recevoir lesdites première et deuxième sous-porteuses ($SC_{E5-S}(t)$, $SC_{E5-S}^{off}(t)$) et pour extraire lesdites composantes en phase ($e_{E5a-I}(t)$, $e_{E5b-I}(t)$) desdits premier et deuxième signaux ($e_{E5a}(t)$, $e_{E5b}(t)$) au moyen desdites première et deuxième sous-porteuses ($SC_{E5-S}(t)$, $SC_{E5-S}^{off}(t)$).

9. Récepteur selon la revendication 8, dans lequel ladite deuxième sous-porteuse ($SC_{E5-S}^{off}(t)$) est une version retardée de ladite première sous-porteuse ($SC_{E5-S}(t)$).

10. Récepteur selon la revendication 9, dans lequel le retard entre lesdites première et deuxième sous-porteuses ($SC_{E5-S}(t)$, $SC_{E5-S}^{off}(t)$) est égal à un quart d'une période de ladite première sous-porteuse.

11. Récepteur selon l'une quelconque des revendications 8 à 10, dans lequel lesdites première et deuxième sous-porteuses ($SC_{E5-S}(t)$, $SC_{E5-S}^{off}(t)$) ont les équations suivantes :

$$sc_{E5-S}(t) = \sum_{i=-\infty}^{+\infty} AS_{|i|_8} \cdot rect_{T_{S,E5}/8}\left(t - i \cdot T_{S,E5}/8\right)$$

$$sc_{E5-S}^{off}(t) = sc_{E5-S}\left(t - T_{S,E5}/4\right)$$

où :

- $SC_{E5-S}(t)$ est ladite première sous-porteuse ;

- $SC_{E5-S}^{off}(t)$ est ladite deuxième sous-porteuse ;
- $AS_{|i|_8}$ est un coefficient multiplicateur ;
- $T_{S,E5}$ est la période desdites première et deuxième sous-porteuses ;
- $rect$ est une fonction d'échantillonnage monocanal ayant une période $T_{S,E5}/8$.

12. Récepteur selon l'une quelconque des revendications 8 à 10, dans lequel lesdits deuxièmes moyens d'extraction (1) comprennent :

- des moyens de multiplication (4, 5) configurés pour multiplier lesdites composantes en phase et en quadrature ($S_{E5I}(t)$, $S_{E5Q}(t)$) dudit signal modulé AltBOC ($S_{E5}(t)$) par, respectivement, lesdites première et deuxième sous-porteuses ($SC_{E5-S}(t)$, $SC_{E5-S}^{off}(t)$), pour ainsi obtenir un premier signal intermédiaire et un deuxième signal intermédiaire.

13. Récepteur selon la revendication 12, dans lequel lesdits deuxièmes moyens d'extraction (1) comprennent, en outre :

- des moyens d'addition (6) configurés pour additionner lesdits premier et deuxième signaux intermédiaires, pour obtenir un signal d'addition ;
- des moyens de soustraction (7) configurés pour soustraire lesdits premier et deuxième signaux intermédiaires, pour obtenir un signal de différence ; et
- des moyens de filtration (8, 9) configurés pour filtrer lesdits signaux d'addition et de soustraction, pour ainsi récupérer lesdites composantes en phase ($e_{E5a\text{-}I}(t)$, $e_{E5b\text{-}I}(t)$) desdits premier et deuxième signaux ($e_{E5a}(t)$, $e_{E5b}(t)$).

14. Récepteur selon la revendication 13, dans lequel lesdits moyens de filtration comprennent des filtres passe-bas en bande de base (8, 9).

15. Produit de programme informatique pouvant être chargé dans un récepteur (10) pour des signaux modulés AltBOC, et conçu pour, lorsqu'il est exécuté, implémenter le procédé de démodulation selon l'une quelconque des revendications 1 à 7.

# Fig.1

# Fig.2

**Fig.3**

**Fig.4**

Fig.5

Fig.6

Fig.7

Fig.8

Fig.9

Fig.10

| Parameter | Explanation | Unit |
|---|---|---|
| $f_X$ | Carrier frequency | Hz |
| $P_X$ | RF-Signal power | W |
| $L_{X\text{-}Y}$ | Ranging code repetition period | chips |
| $T_{C,X\text{-}Y}$ | Ranging code chip length | s |
| $T_{S,X\text{-}Y}$ | Subcarrier period | s |
| $T_{D,X\text{-}Y}$ | Navigation message symbol duration | s |
| $R_{C,X\text{-}Y}$ | $= 1/T_{C,X\text{-}Y}$; Code chip rate | Hz |
| $R_{S,X\text{-}Y}$ | $= 1/T_{S,X\text{-}Y}$; Subcarrier frequency | Hz |
| $R_{D,X\text{-}Y}$ | $= 1/T_{D,X\text{-}Y}$; Navigation message symbol rate | Hz |
| $C_{X\text{-}Y}(t)$ | Binary (NRZ modulated) ranging code | |
| $D_{X\text{-}Y}(t)$ | Binary (NRZ modulated) navigation message signal | |
| $sc_{X\text{-}Y}(t)$ | Subcarrier waveform | |
| $e_{X\text{-}Y}(t)$ | Binary NRZ modulated navigation signal component including code and navigation message data (if available); $e_{X\text{-}Y}(t) = C_{X\text{-}Y}(t) \cdot D_{X\text{-}Y}(t)$ | |
| $s_X(t)$ | $= s_{X\text{-}I}(t) + j \cdot s_{X\text{-}Q}(t)$ Normalized baseband signal (unit mean power); | |
| $S_X(t)$ | $= \sqrt{2 \cdot P_X} \cdot [s_{X\text{-}I}(t) \cdot \cos(2\pi f_X t) - s_{X\text{-}Q}(t) \cdot \sin(2\pi f_X t)]$ Signal pass-band representation; | |
| $c_{X\text{-}Y,k}$ | '$k^{th}$' Chip of the ranging code | |
| $d_{X\text{-}Y,k}$ | '$k^{th}$' Symbol of the navigation message | |
| $DC_{X\text{-}Y}$ | $= T_{D,X\text{-}Y}/T_{C,X\text{-}Y}$; Number of code chips per symbol | |
| $|i|_L$ | '$i$' modulo $L$ | |
| $[i]_{DC}$ | Integer part of $(i/DC)$ | |
| $\text{rect}_T(t)$ | Function "rectangle", which is equal to 1 for $0 < t < T$, and it is equal to 0 elsewhere | |

# Fig.11

| | 0 | 1 | 2 | 3 | 4 | 5 | 6 | 7 |
|---|---|---|---|---|---|---|---|---|
| $2 \cdot AS_i$ | $\sqrt{2}+1$ | 1 | -1 | $-\sqrt{2}-1$ | $-\sqrt{2}-1$ | -1 | 1 | $\sqrt{2}+1$ |
| $2 \cdot AP_i$ | $-\sqrt{2}+1$ | 1 | -1 | $\sqrt{2}-1$ | $\sqrt{2}-1$ | -1 | 1 | $-\sqrt{2}+1$ |

# Fig.12

| | Input Quadruples | | | | | | | | | | | | | | |
|---|---|---|---|---|---|---|---|---|---|---|---|---|---|---|---|
| $e_{2Sa-I}$ | -1 | -1 | -1 | -1 | -1 | -1 | -1 | -1 | 1 | 1 | 1 | 1 | 1 | 1 | 1 |
| $e_{2Sb-I}$ | -1 | -1 | -1 | -1 | 1 | 1 | 1 | 1 | -1 | -1 | -1 | -1 | 1 | 1 | 1 |
| $e_{2Sa-Q}$ | -1 | -1 | 1 | 1 | -1 | -1 | 1 | 1 | -1 | -1 | 1 | 1 | -1 | -1 | 1 |
| $e_{2Sb-Q}$ | -1 | 1 | -1 | 1 | -1 | 1 | -1 | 1 | -1 | 1 | -1 | 1 | -1 | -1 | 1 |
| $t' = t \bmod T_{2ES}$ | | | | | | | $k$ (according to $s_{Sa}(t) = \exp(jk\pi/4)$) | | | | | | | | |
| $i/T_c$ | $i$ | | | | | | | | | | | | | | |
| 0 | $[0, T_cES/8[$ | 5 | 4 | 4 | 3 | 6 | -3 | 1 | 2 | 6 | 5 | 7 | 2 | 7 | 8 | 8 | 1 |
| 1 | $[T_cES/8, 2 \cdot T_cES/8[$ | 5 | 4 | 8 | 3 | 2 | 3 | 1 | 2 | 6 | 5 | 7 | 6 | 7 | 4 | 8 | 1 |
| 2 | $[2 \cdot T_cES/8, 3 \cdot T_cES/8[$ | 1 | 4 | 8 | 7 | 2 | 3 | 1 | 2 | 6 | 5 | 7 | 6 | 3 | 4 | 8 | 5 |
| 3 | $[3 \cdot T_cES/8, 4 \cdot T_cES/8[$ | 1 | 8 | 8 | 7 | 2 | 3 | 1 | 6 | 2 | 5 | 7 | 6 | 3 | 4 | 4 | 5 |
| 4 | $[4 \cdot T_cES/8, 5 \cdot T_cES/8[$ | 1 | 8 | 8 | 7 | 2 | 7 | 5 | 6 | 2 | 1 | 3 | 6 | 3 | 4 | 4 | 5 |
| 5 | $[5 \cdot T_cES/8, 6 \cdot T_cES/8[$ | 1 | 8 | 4 | 7 | 6 | 7 | 5 | 6 | 2 | 1 | 3 | 2 | 3 | 8 | 4 | 5 |
| 6 | $[6 \cdot T_cES/8, 7 \cdot T_cES/8[$ | 5 | 8 | 4 | 3 | 6 | 7 | 5 | 6 | 2 | 1 | 3 | 2 | 7 | 8 | 4 | 1 |
| 7 | $[7 \cdot T_cES/8, T_{2ES}[$ | 5 | 4 | 4 | 3 | 6 | 7 | 5 | 2 | 6 | 1 | 3 | 2 | 7 | 8 | 8 | 1 |

# Fig.13

29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 200500611 A
- WO 2006027004 A

- WO 2005006011 A